# EUROPEAN PATENT SPECIFICATION

(11) **EP 4 536 749 B1**
(45) Date of publication and mention of the grant of the patent: **05.08.2026**
(21) Application number: 23732099.9
(22) Date of filing: 12.06.2023
(51) Int. Cl.: C08L 25/12, C08L 23/12

(54) **POLYMER COMPOSITION COMPRISING POST-CONSUMER RECYCLED POLYMERS**
POLYMERZUSAMMENSETZUNG MIT RECYCELTEN POLYMEREN NACH DEM VERBRAUCH
COMPOSITION DE POLYMÈRE COMPRENANT DES POLYMÈRES RECYCLÉS POST-CONSOMMATION

(30) Priority: 13.06.2022 EP 22178733
(43) Date of publication of application: 16.04.2025
(73) Proprietor: INEOS Styrolution Group GmbH, 60325 Frankfurt (DE)
(72) Inventor: NIESSNER, Norbert, 67159 Friedelsheim (DE); WILHELMUS, Bianca, 63456 Hanau (DE)
(74) Representative: Jacobi, Markus Alexander
(86) International application number: PCT/EP2023/065573
(87) International publication number: WO 2023/242078

(56) References cited:
- WO-A1-2021/110751
- JP-A- 2001 279 114

## Description

The present invention relates to a polymer composition P comprising at least one post-consumer recycled polymer and at least one post-consumer recycled vinylaromatic copolymer. It was found that by admixing at least one post-consumer recycled vinylaromatic copolymer, polymer blends of common post-consumer recycled polymers with good compatibility are be obtained. The invention also relates to a process for mechanical recycling of post-consumer polymers, as well as the use of a post-consumer recycled vinylaromatic copolymer for improving the compatibility of recycled polymers.

Mechanical recycling of polymers is the most prominent measure to ensure a circular economy in the polymer sector. With moderate effort for cleaning and compounding, it is possible to substitute virgin polymers, which are typically based on fossil monomers.

Polymer blends are known to have poor mechanical, thermal, and flow properties even when the individual components have very desirable ones. In particular, plastic mixtures have low ductility and poor impact strength, which limits their use to less demanding applications. For high value applications, it is necessary to first separate plastic waste by polymer type. However, high purity of post-consumer recycled polymers, which improves the performance significantly, goes along with higher costs for the separation process (cf. Utracki, Wilkie "Polymer Blends Handbook", 2nd Ed, Springer Science 2014, Vol. 1, page 126). Processes for the recycling of polymer waste and polymer compositions comprising recycled polymers are generally known in the art. Reference is made for example to JP 2001-279114 A, US 9,631,078, WO 2019/074893, US 7,884,140, US 2014/0228518, EP 3540009, or EP 0543975. WO 2021/110751 A1 describes thermoplastic molding compositions comprising 10 to 99 %-bw of at least one recycled polymer material (A), 0.1 to 30 wt-% of at least one graft copolymer (B) and 0.1 to 18 wt-% of at least one block copolymer (C), wherein the polymer material (A) comprises 20 to 100 %-bw of at least one recycled ABS copolymer (A1).

JP 2001 279114 A teaches a recycled resin composition containing a resin mixture to be recycled and an auxiliary agent consisting of a styrene elastomer and a polyester elastomer. The resin mixture to be recycled preferably contains ABS and/or polystyrene. §

As it is hardly possible to obtain post-consumer plastics with 100 % purity under economical and technical aspects, a key step for achieving a high quality post-consumer recycled polymer composition is a good miscibility of the to-be-recycled polymer with other polymers.

Miscible or compatible polymer blends are defined in the state-of-the-art as polymer blends, which are homogenous down to the molecular level, i.e. a blend whose domain size is comparable to the dimension of the macromolecular statistical segment (cf. Utracki, Wilkie "Polymer Blends Handbook", 2nd Ed, Springer Science 2014, Vol. 1, page 20). Thus, the domain size of miscible blends is within the range of just a few nanometers. Compatible polymer blends generally form domains with sizes of < 5 nm while incompatible blends form domain sizes > 30 nm (cf. Utracki, Wilkie "Polymer Blends Handbook", 2nd Ed, Springer Science 2014, Vol. 3, page 1859).

It was surprisingly found by the present inventors that polymer blends of post-consumer recycled polymers despite of having domain sizes > 30 nm exhibit excellent properties, as long as the polymer blend comprises at least 50 wt.-% of at least one vinylaromatic copolymer.

In particular, the present invention relates to a polymer composition P comprising (or consisting of):
A: 0.1 to 50 parts by weight, preferably 1 to 50 parts by weight, often 10 to 50 parts by weight, of at least one post-consumer recycled polymer as component A;
B: 50 to 99.9 parts by weight, preferably 50 to 99 parts by weight, often 50 to 90 parts by weight, of at least one post-consumer recycled vinylaromatic copolymer as component B, comprising:
   B1: 10 to 100 wt.-% of at least one thermoplastic vinylaromatic copolymer B1, comprising:
      B1.1: 1 to 81 wt.-% of repeating units of styrene,
      B1.2: 19 to 35 wt.-% of repeating units of acrylonitrile,
      B1.3: 0 to 80 wt.-% of repeating units of at least one monomer selected from methyl(meth)acrylate (MMA), maleic anhydride (MA), and N-phenyl-maleimide (n-PMI),
      B1.4: 0 to 20 wt.-% of repeating units of at least one further co-monomer different from B1.1, B1.2 and B1.3;
      wherein B1.1, B1.2, B1.3 and B1.4 sum up to 100 wt.-% of the thermoplastic vinylaromatic copolymer B1;
      and
   B2: 0 to 90 wt.-% of at least one impact-modifying polymer B2; wherein B1 and B2 sum up to 100 wt.-% of the vinylaromatic copolymer B;
C: 0 to 200 parts by weight, preferably 0 to 150 parts by weight, often 0 to 100 parts by weight, of an essentially non-post-consumer recycled (virgin) vinylaromatic copolymer as component C, comprising:
   C1: 10 to 100 wt.-% of at least one thermoplastic vinylaromatic copolymer C1, comprising:
      C1.1: 1 to 81 wt.-% of repeating units of styrene and/or styrene derivatives,
      C1.2: 19 to 35 wt.-% of repeating units of acrylonitrile and / or methacrylonitrile, preferably acrylonitrile,
      C1.3: 0 to 80 wt.-% of repeating units of at least one monomer selected from methyl(meth)acrylate (MMA), maleic anhydride (MA), and N-phenyl-maleimide (n-PMI),
      C1.4: 0 to 20 wt.-% of repeating units of at least one further co-monomer different from C1.1, C1.2 and C1.3;
      wherein C1.1, C1.2, C1.3 and C1.4 sum up to 100 wt.-% of the thermoplastic vinylaromatic copolymer C1;
      and
   C2: 0 to 90 wt.-% of at least one impact-modifying polymer C2;
   wherein C1 and C2 sum up to 100 wt.-% of the non-post-consumer recycled (virgin) vinylaromatic copolymer C;
   and
D: 0 to 10 parts by weight, preferably 0 to 5 parts by weight, often 0 to 3 parts by weight, often 0.1 to 3 pbw., of at least one further additive as component D;

wherein components A, B, C and D sum up to 100 wt.-% of the polymer composition P; and wherein the post-consumer recycled polymer A is dissolved in the vinylaromatic copolymer B and optionally vinylaromatic copolymer C, and/or
wherein the post-consumer recycled polymer A is dispersed in form of discontinuous phase domains in a continuous phase of the vinylaromatic copolymer B and optionally vinylaromatic copolymer C; and
wherein the discontinuous phase domains of the post-consumer recycled polymer A at least comprise phase domains having an average diameter in the range of from > 30 nm to ≤ 5 µm, preferably > 30 nm to ≤ 2 µm, more preferably > 30 nm to ≤ 200 nm, often > 30 nm to ≤ 100 nm,
wherein the post-consumer recycled polymer A and the post-consumer recycled vinylaromatic polymer B are selected from different polymer classes,
wherein the post-consumer recycled polymer A comprises at least one polymer selected from polyamides, polycarbonates, thermoplastic polyurethanes, polyalkyl(meth)acrylates, polyvinylchlorides, polystyrene, vinylaromatic-acrylonitrile copolymers, alpha-methylstyrene-acrylonitrile copolymers, vinylaromatic-diene-acrylonitrile copolymers, and vinylaromatic-acrylate copolymers,
and wherein the post-consumer recycled polymer component A and the post-consumer recycled vinylaromatic copolymer component B are prepared from waste plastic material.

According to the present invention, the wording "the post-consumer recycled polymer A is dissolved in the vinylaromatic copolymer B and optionally vinylaromatic copolymer C" means that the post-consumer recycled polymer A and the vinylaromatic copolymer B and optionally vinylaromatic copolymer C form a homogenous mixture at a molecular level. No domains of either of the copolymers A, B, or C are formed within this homogeneous mixture. The homogenous mixture forms a single continuous phase.

It was surprisingly found by the inventors, that by admixing at least one post-consumer recycled vinylaromatic copolymer component B with the post-consumer recycled polymer component A, it is possible to obtain recycled copolymer blends which exhibit good compatibility and sufficient characteristics for further use in different high quality applications.

Without being bound to the theory, it is believed that the vinylaromatic copolymer component B is compatible with a variety of different classes of polymers due to the combination of polar and apolar moieties within the vinylaromatic copolymer B and thus functions as a compatibilizer in the polymer composition P according to the invention. This allows the joint recycling of a variety of polymer components A, which are often not sufficiently compatible, but which are typically present in recycled post-consumer waste.

In terms of the present invention, the term "post-consumer recycled polymer" or "post-consumer recycled vinylaromatic copolymer" refers to a polymer that is prepared from waste plastic material, in particular from recycled durable goods, typically in a recycling and separation process. The post-consumer recycled polymer (i.e. component A) or post-consumer recycled vinylaromatic copolymer (i.e. component B) has passed at least one separate thermal compounding step prior to the admixing step, e.g. an extrusion process, an injection-molding process, etc.

In terms of the present invention "durable goods" or "recycled durable goods" means goods, such as household appliances, machineries, sport equipment, consumer electronics, and automobiles, that are not consumed or destroyed quickly in use, but are expected to last and yield utility a long time, in particular three or more years. In particular, the term "post-consumer products" or "post-consumer durable goods" refers to products or goods after their intended use, in particular after their use for three or more years, e.g. such material is collected and recycled in form of waste plastic material.

In terms of the present invention, the terms "non-post-consumer recycled vinylaromatic copolymer" or "virgin vinylaromatic copolymer" refer to a vinylaromatic copolymer material, which is made from geological resources, and is not made from existing and in particular used material. In terms of the present invention, virgin polymer material means a polymer, which is made from geological resources, such as petroleum, and is not made from existing and in particular used plastic material.

The invention, the constituents A, B, C and D, as well as the polymer composition P are described in further detail herein below.

### Post-consumer recycled polymer A

Post-consumer recycled polymers are typically not single-grade polymers but mixtures comprising varying amounts of different polymer types. The post-consumer recycled polymer A comprises at least one polymer selected from the following polymer classes: polycarbonates (PC), thermoplastic polyurethanes (TPU), polyamides (PA), polyalkyl(meth)acrylates, in particular polymethyl(meth)acrylate (PMMA), polyvinylchlorides (PVC), polystyrene (PS) and vinylaromatic copolymers such as vinylaromatic-acrylonitrile copolymers (e.g. styrene-acrylonitrile copolymers (SAN) and alpha-methylstyrene-acrylonitrile copolymers (AMSAN)), vinylaromatic-diene-acrylonitrile copolymers (e.g. poly(acrylonitrile-butadiene-styrene) (ABS)) or vinylaromatic-acrylate copolymers (e.g. poly(acrylonitrile-styrene-acrylic ester) (ASA)). Particular preferred non-vinylaromatic copolymers include polycarbonates (PC), polyamides (PA), thermoplastic polyurethanes (TPU), polymethyl(meth)acrylate (PMMA), polyvinylchlorides (PVC). Preferred vinylaromatic copolymers include polystyrene and vinylaromatic-acrylonitrile copolymers such as styrene-acrylonitrile copolymers (SAN), alpha-methylstyrene-acrylonitrile copolymers (AMSAN).

Preferably, the post-consumer recycled polymer A comprises more than 80 wt.-%, more preferably 90 to 100 wt.-%, often 95 to 100 wt.-%, based on the total weigh of the polymer A, of at least one polymer selected from polycarbonates (PC), polyamides (PA), thermoplastic polyurethanes (TPU), polyalkyl(meth)acrylates, in particular polymethyl(meth)acrylate (PMMA), polyvinylchlorides (PVC), polystyrene (PS) and vinylaromatic copolymers such as vinylaromatic-acrylonitrile copolymers (e.g. styrene-acrylonitrile copolymers (SAN) and alpha-methylstyrene-acrylonitrile copolymers (AMSAN)), vinylaromatic-diene-acrylonitrile copolymers (e.g. poly(acrylonitrile-butadiene-styrene) (ABS)) or vinylaromatic-acrylate copolymers (e.g. poly(acrylonitrile-styrene-acrylic ester) (ASA)).

Preferably, the post-consumer recycled polymer A comprises less than 60 wt.-%, more preferably 0 to 40 wt.-%, often 0 to 20 wt.-%, based on the total weigh of the polymer A, of at least one polymer selected from polyolefins, such as polyethylene (PE), polypropylene (PP) and (ethylene/propylene) copolymers, and polyesters such as polyethylene terephthalate (PET).

In view of the difficulties in separation of polymers during post-consumer recycling, the recycled polymer A often comprises at least two polymers selected from the following polymer classes: polycarbonates (PC), polyamides (PA), thermoplastic polyurethanes (TPU), polyalkyl(meth)acrylates, in particular polymethyl(meth)acrylate (PMMA), polyvinylchlorides (PVC), polystyrene (PS) and vinylaromatic copolymers such as vinylaromatic-acrylonitrile copolymers (e.g. styrene-acrylonitrile copolymers (SAN) and alpha-methylstyrene-acrylonitrile copolymers (AMSAN)), vinylaromatic-diene-acrylonitrile copolymers (e.g. poly(acrylonitrile-butadiene-styrene) (ABS)) or vinylaromatic-acrylate copolymers (e.g. poly(acrylonitrile-styrene-acrylic ester) (ASA)).

In one embodiment, the recycled polymer A comprises at least one polymer, often at least two polymers, selected from thermoplastic polyurethanes (TPU), polymethyl(meth)acrylates (PMMA), polyamides (PA), polycarbonates (PC), alpha-methylstyrene-acrylonitrile copolymers (AMSAN) and polystyrenes (PS).

The post-consumer recycled polymers A, their preparation and properties are well known in the art and described in the literature. The processes by which the post-consumer recycled polymers A are prepared are not limited.

According to the invention, a polymer class is a group of polymers with common structural features.

The recycled polymers A often comprise additives, which are conventionally used to adjust the properties of the polymers A to improve the processability, the performance characteristics and/or the visual appearance. Examples of such additives include demolding agents, lubricants, flame retardants, colorants, dyes, pigments, fillers, plasticizers, which are generally known in the art and described in the literature (see e.g. "Plastics Additives Handbook", Hans Zweifel, 6th edition, Hanser Publ., Munich, 2009).

Moreover, since the recycling process is a technical process, which typically is not able to provide recycled polymers of 100% purity, the recycled polymers A often comprise impurities, depending on the previous fields of applications of the polymers, including metal parts, e.g. aluminum, or non-thermoplastic polymers such as polyurethane foams or elastomers.

For the purpose of the invention, all additives account to the total weight of the post-consumer recycled polymer A, i.e. any weight specification for the post-consumer recycled polymer A given herein refers to the post-consumer recycled polymer A as such including the polymer A and all optional additives (and/or optional impurities) present therein.

### Post-consumer recycled vinylaromatic copolymer B

According to the invention, the polymer composition P comprises 50 to 99.9 parts by weight of at least one post-consumer recycled vinylaromatic copolymer component B, which comprises (or consists of):
B1: 10 to 100 wt.-%, preferably 30 to 100 wt.-%, more preferably 50 to 100 wt.-%, based on the total weight of the vinylaromatic copolymer B, of at least one thermoplastic vinylaromatic copolymer B1, comprising:
   B1.1: 1 to 81 wt.-% of repeating units of styrene,
   B1.2: 19 to 35 wt.-% of repeating units of acrylonitrile,
   B1.3: 0 to 80 wt.-% of repeating units of at least one monomer selected from methyl(meth)acrylate (MMA), maleic anhydride (MA), and N-phenyl-maleimide (n-PMI),
   B1.4: 0 to 20 wt.-% of repeating units of at least one further co-monomer different from B1.1, B1.2 and B1.3;
   wherein B1.1, B1.2, B1.3 and B1.4 sum up to 100 wt.-% of the thermoplastic vinylaromatic copolymer B1;
   and
B2: 0 to 90 wt.-%, preferably 0 to 70 wt.-%, more preferably 0 to 50 wt.-%, based on the total weight of the vinylaromatic copolymer B, of at least one impact-modifying polymer B2;
wherein B1 and B2 sum up to 100 wt.-% of the vinylaromatic copolymer B.

In one embodiment, the vinylaromatic copolymer B comprises at least one styrene-copolymer and/or an alpha-methylstyrene-copolymer comprising:
B1.1: 65 to 81 wt.-% of repeating units of styrene, and
B1.2: 19 to 35 wt.-% of repeating units of acrylonitrile;
wherein B1.1 and B1.2 sum up to 100 wt.-% of the vinylaromatic copolymer B;

According to one embodiment of the invention, the vinylaromatic copolymer B optionally comprises at least one impact-modifying polymer B2, which is preferably composed of:
B2.1: from 20 to 90 wt.-%, preferably from 40 to 90 wt.-%, more preferably from 45 to 85 wt.-%, often from 50 to 80 wt.-%, based on the total weight of the impact-modifying polymer B2, of a graft base of one or more monomers consisting of:
   B2.11: 70 to 100 wt.-%, preferably 75 to 100 wt.-%, more preferably 80 to 100 wt.-%, based on the total weight of the graft base B2.1, of at least one conjugated diene, in particular butadiene, and / or at least one C₁-C₈ alkyl(meth)acrylate, in particular n-butyl acrylate and / or 2-ethylhexyl acrylate,
   B2.12: 0 to 30 wt.-%, preferably 0 to 25 wt.-%, more preferably 0 to 20 wt.-%, based on the total weight of the graft base B2.1, of at least one further comonomer selected from: styrene, α-methyl styrene, acrylonitrile, methacrylonitrile, methyl methacrylate, maleic acid anhydride and N-phenylmaleimide, preferably styrene and α-methyl styrene, particularly preferably styrene;
   B2.13: from 0 to 10 wt.-%, preferably from 0.01 to 5, often from 0.02 to 2 wt.-%, based on the total weight of the graft base B2.1, of one or more polyfunctional crosslinking monomers, selected from chosen from allyl(meth)acrylate, divinylbenzene, diallylmaleate, diallylfumarate, diallylphthalate, triallylcyanurat, triallylisocyanurat and dicyclopentadienylacrylate (DCPA), which, when component B2.11 is acrylate (e.g. C₁-C₈ alkyl(meth)acrylate), is present in amounts of at least 0.1 wt.-%;
B2.2: from 10 to 80 wt.-%, preferably from 10 to 60 wt.-%, more preferably from 15 to 55 wt.-%, often from 20 to 50 wt.-%, based on the total weight of the impact-modifying polymer B2, of at least one graft layer of one or more monomers consisting of:
   B2.21: from 65 to 95 wt.-%, preferably from 70 to 90 wt.-%, more preferably from 75 to 85 wt.-%, based on the total weight of the graft layer B2.2, of at least one vinylaromatic monomer, preferably styrene and / or α-methyl styrene, in particular styrene;
   B2.22: 5 to 35 wt.-%, preferably 10 to 30 wt.-%, more preferably 15 to 25 wt.-%, based on the total weight of the graft layer B2.2, of acrylonitrile and / or methacrylonitrile, preferably acrylonitrile; and
B2.3: 0 to 30 wt.-%, preferably 0 to 20 wt.-%, more preferably 0 to 15 wt.-%, based on the total weight of the impact-modifying polymer B2, of at least one further constituent selected from:
   at least one monoethylenically unsaturated monomer selected from: methyl methacrylate, maleic acid anhydride and N-phenylmaleimide, preferably methyl methacrylate and/or
   at least one molecular weight regulator, in particular a thiol-based molecular weight regulator such as tert-dodecylmercaptan.

In a preferred embodiment, the impact-modifying polymer B2 is selected from poly(acrylonitrile-butadiene-styrene) (ABS) and poly(acrylonitrile-styrene-acrylic ester) (ASA) and mixtures thereof.

In one embodiment, the impact-modifying polymer B2 according to the invention is an ABS vinylaromatic copolymer composed of:
B2.1: from 40 to 90 wt.-%, based on the total weight of the impact-modifying polymer B2, of a graft base consisting of:
   B2.11: from 70 to 100 wt.-%, preferably from 90 to 99.9 wt.-%, based on the total weight of the graft base (B2.1), of butadiene,
   B2.12: 0 to 30 wt.-%, preferably 1 to 10 wt.-%, based on the total weight of the graft base (B2.1), of styrene and
B2.2: from 10 to 60 wt.-%, based on the total weight of the impact-modifying polymer B2, of a graft comprising:
   B2.21: from 65 to 95 wt.-%, based on the total weight of the graft layer (B2.2), of styrene;
   B2.22: 5 to 35 wt.-%, based on the total weight of the graft layer (B2.2), of acrylonitrile and
B2.3: 0 to 30 wt.-%, based on the total weight of the impact-modifying polymer B2, MMA and/or tert-dodecylmercaptan.

In an alternative embodiment, the impact-modifying polymer B2 according to the invention is an ASA vinylaromatic copolymer composed of:
B2.1: from 40 to 90 wt.-%, based on the total weight of the impact-modifying polymer B2, of a graft base consisting of:
   B2.11: from 70 to 99.9 wt.-%, preferably from 90 to 99.5 wt.-%, based on the total weight of the graft base (B2.1), of at least one C₁-C₈ alkyl(meth)acrylate, preferably n-butylacrylate and/or 2-ethylhexylacrylate, in particular n-butylacrylate,
   B2.12: 0 to 30 wt.-%, preferably 1 to 10 wt.-%, based on the total weight of the graft base (B2.1), of styrene,
   B2.13: 0.5 to 5 wt.-%, preferably 0.1 to 5 wt.-%, in particular 0.5 to 3 wt.-%, most preferred 1 to 2.5 wt.-%, based on the total weight of the graft base (B2.1), of at least one polyfunctional cross-linking monomer, selected from chosen from allyl(meth)acrylate, divinylbenzene, diallylmaleate, diallylfumarate, diallylphthalate, triallylcyanurat, triallylisocyanurat and dicyclopentadienylacrylate (DCPA), preferably selected from allyl(meth)acrylate and DCPA, in particular DCPA, and
B2.2: from 10 to 60 wt.-%, based on the total weight of the impact-modifying polymer B2, of a graft comprising:
   B2.21: from 65 to 95 wt.-%, based on the total weight of the graft layer (B2.2), of styrene;
   B2.22: 5 to 35 wt.-%, based on the total weight of the graft layer (B2.2), of acrylonitrile and
B2.3: 0 to 30 wt.-%, based on the total weight of the impact-modifying polymer B2, of MMA.

In one embodiment of the invention, the post-consumer recycled vinylaromatic copolymer component B comprises 80 to 100 wt.-%, based on the total weight of the vinylaromatic copolymer B, of at least one thermoplastic vinylaromatic copolymer B1. Often, the post-consumer recycled vinylaromatic copolymer component B comprises less than 5 wt.-% of the impact-modifying polymer B2, based on the total weigh of the vinylaromatic copolymer B, often less than 1 wt.-%, for example less than 0.1 wt.-%.

In a preferred embodiment, the post-consumer recycled vinylaromatic copolymer B is selected from the group consisting of styrene-acrylonitrile copolymers, blends of mixtures of at least one styrene-acrylonitrile copolymers with poly(acrylonitrile-butadienestyrene) (ABS) or poly(acrylonitrile-styrene-acrylic ester) (ASA), and mixtures thereof.

The post-consumer recycled copolymer B often comprises additives, which are conventionally used to adjust the properties of the copolymer B to improve the processability, the performance characteristics and/or the visual appearance. Examples of such additives include demolding agents, lubricants, flame retardants, colorants, dyes, pigments, fillers, plasticizers, which are generally known in the art and described in the literature (see e.g. "Plastics Additives Handbook", Hans Zweifel, 6th edition, Hanser Publ., Munich, 2009).

For the purpose of the invention, all additives account to the total weight of the post-consumer recycled copolymer B, i.e. any weight specification for the post-consumer recycled copolymer B given herein refers to the post-consumer recycled copolymer B as such including the copolymer B and all optional additives (and/or optional impurities) present therein.

### Non-post-consumer recycled vinylaromatic copolymer C

The polymer composition P optionally comprises a further vinylaromatic copolymer C that originates not from post-consumer recycling. The vinylaromatic copolymer C is also designated as virgin vinylaromatic copolymer C and is typically obtained from fossil resources.

According to the invention, the polymer composition P may further comprise 0 to 200 parts by weight of at least one virgin vinylaromatic copolymer component C, which comprises:
C1: 10 to 100 wt.-%, preferably 30 to 100 wt.-%, more preferably 50 to 100 wt.-%, based on the total weight of the vinylaromatic copolymer C, of at least one thermoplastic vinylaromatic copolymer C1, comprising:
   C1.1: 1 to 81 wt.-% of repeating units of styrene and/or styrene derivatives,
   C1.2: 19 to 35 wt.-% of repeating units of acrylonitrile and / or methacrylonitrile, preferably acrylonitrile,
   C1.3: 0 to 80 wt.-% of repeating units of at least one monomer selected from methyl(meth)acrylate (MMA), maleic anhydride (MA), and N-phenyl-maleimide (n-PMI),
   C1.4: 0 to 20 wt.-% of repeating units of at least one further co-monomer different from C1.1, C1.2 and C1.3;
   wherein C1.1, C1.2, C1.3 and C1.4 sum up to 100 wt.-% of the thermoplastic vinylaromatic copolymer C1;
   and
C2: 0 to 90 wt.-%, preferably 0 to 70 wt.-%, more preferably 0 to 50 wt.-%, based on the total weight of the vinylaromatic copolymer C, of at least one impact-modifying polymer C2;
wherein C1 and C2 sum up to 100 wt.-% of the vinylaromatic copolymer C.

In one embodiment, the vinylaromatic copolymer C comprises at least one styrene copolymer and/or an alpha-methylstyrene copolymer comprising:
C1.1: 65 to 81 wt.-% of repeating units of styrene and/or alpha-methylstyrene, preferably styrene, and
C1.2: 19 to 35 wt.-% of repeating units of acrylonitrile and / or methacrylonitrile, preferably acrylonitrile, preferably acrylonitrile;
wherein C1.1 and C1.2 sum up to 100 wt.-% of the vinylaromatic copolymer C;

According to one embodiment of the invention, the vinylaromatic copolymer C optionally comprises at least one impact-modifying polymer C2, which is preferably composed of:
C2.1: from 20 to 90 wt.-%, preferably from 40 to 90 wt.-%, more preferably from 45 to 85 wt.-%, often from 50 to 80 wt.-%, based on the total weight of the impact-modifying polymer C2, of a graft base of one or more monomers consisting of:
   C2.11: 70 to 100 wt.-%, preferably 75 to 100 wt.-%, more preferably 80 to 100 wt.-%, based on the total weight of the graft base C2.1, of at least one conjugated diene, in particular butadiene, and / or at least one C₁-C₈ alkyl(meth)acrylate, in particular n-butyl acrylate and / or 2-ethylhexyl acrylate,
   C2.12: 0 to 30 wt.-%, preferably 0 to 25 wt.-%, more preferably 0 to 20 wt.-%, based on the total weight of the graft base C2.1, of at least one further comonomer selected from: styrene, α-methyl styrene, acrylonitrile, methacrylonitrile, methyl methacrylate, maleic acid anhydride and N-phenylmaleimide, preferably styrene and α-methyl styrene, particularly preferably styrene;
   C2.13: from 0 to 10 wt.-%, preferably from 0.01 to 5, often from 0.02 to 2 wt.-%, based on the total weight of the graft base C2.1, of one or more polyfunctional crosslinking monomers, selected from chosen from allyl(meth)acrylate, divinylbenzene, diallylmaleate, diallylfumarate, diallylphthalate, triallylcyanurat, triallylisocyanurat and dicyclopentadienylacrylate (DCPA), which, when component C2.11 is acrylate (e.g. C₁-C₈ alkyl(meth)acrylate), is present in amounts of at least 0.1 wt.-%;
C2.2: from 10 to 80 wt.-%, preferably from 10 to 60 wt.-%, more preferably from 15 to 55 wt.-%, often from 20 to 50 wt.-%, based on the total weight of the impact-modifying polymer C2, of at least one graft layer of one or more monomers consisting of:
   C2.21: from 65 to 95 wt.-%, preferably from 70 to 90 wt.-%, more preferably from 75 to 85 wt.-%, based on the total weight of the graft layer C2.2, of at least one vinylaromatic monomer, preferably styrene and / or α-methyl styrene, in particular styrene;
   C2.22: 5 to 35 wt.-%, preferably 10 to 30 wt.-%, more preferably 15 to 25 wt.-%, based on the total weight of the graft layer C2.2, of acrylonitrile and / or methacrylonitrile, preferably acrylonitrile; and
C2.3: 0 to 30 wt.-%, preferably 0 to 20 wt.-%, more preferably 0 to 15 wt.-%, based on the total weight of the impact-modifying polymer C2, of at least one further constituent selected from:
   at least one monoethylenically unsaturated monomer selected from: methyl methacrylate, maleic acid anhydride and N-phenylmaleimide, preferably methyl methacrylate and/or
   at least one molecular weight regulator, in particular a thiol-based molecular weight regulator such as tert-dodecylmercaptan.

In a preferred embodiment, the impact-modifying polymer C2 is selected from poly(acrylonitrile-butadiene-styrene) (ABS) and poly(acrylonitrile-styrene-acrylic ester) (ASA) and mixtures thereof.

In one embodiment, the impact-modifying polymer C2 according to the invention is an ABS vinylaromatic copolymer composed of:
C2.1: from 40 to 90 wt.-%, based on the total weight of the impact-modifying polymer C2, of a graft base consisting of:
   C2.11: from 70 to 100 wt.-%, preferably from 90 to 99.9 wt.-%, based on the total weight of the graft base (C2.1), of butadiene,
   C2.12: 0 to 30 wt.-%, preferably 1 to 10 wt.-%, based on the total weight of the graft base (C2.1), of styrene and
C2.2: from 10 to 60 wt.-%, based on the total weight of the impact-modifying polymer C2, of a graft comprising:
   C2.21: from 65 to 95 wt.-%, based on the total weight of the graft layer (C2.2), of styrene;
   C2.22: 5 to 35 wt.-%, based on the total weight of the graft layer (C2.2), of acrylonitrile and
C2.3: 0 to 30 wt.-%, based on the total weight of the impact-modifying polymer C2, MMA and/or tert-dodecylmercaptan.

In an alternative embodiment, the impact-modifying polymer C2 according to the invention is an ASA vinylaromatic copolymer composed of:
C2.1: from 40 to 90 wt.-%, based on the total weight of the impact-modifying polymer C2, of a graft base consisting of:
   C2.11: from 70 to 99.9 wt.-%, preferably from 90 to 99.5 wt.-%, based on the total weight of the graft base (C2.1), of at least one C₁-C₈ alkyl(meth)acrylate, preferably n-butylacrylate and/or 2-ethylhexylacrylate, in particular n-butylacrylate,
   C2.12: 0 to 30 wt.-%, preferably 1 to 10 wt.-%, based on the total weight of the graft base (C2.1), of styrene,
   C2.13: 0.5 to 5 wt.-%, preferably 0.1 to 5 wt.-%, in particular 0.5 to 3 wt.-%, most preferred 1 to 2.5 wt.-%, based on the total weight of the graft base (C2.1), of at least one polyfunctional cross-linking monomer, selected from chosen from allyl(meth)acrylate, divinylbenzene, diallylmaleate, diallylfumarate, diallylphthalate, triallylcyanurat, triallylisocyanurat and dicyclopentadienylacrylate (DCPA), preferably selected from allyl(meth)acrylate and DCPA, in particular DCPA, and
C2.2: from 10 to 60 wt.-%, based on the total weight of the impact-modifying polymer C2, of a graft comprising:
   C2.21: from 65 to 95 wt.-%, based on the total weight of the graft layer (C2.2), of styrene;
   C2.22: 5 to 35 wt.-%, based on the total weight of the graft layer (C2.2), of acrylonitrile and
C2.3: 0 to 30 wt.-%, based on the total weight of the impact-modifying polymer C2, of MMA.

In one embodiment of the invention, the post-consumer recycled vinylaromatic copolymer component B comprises 80 to 100 wt.-%, based on the total weight of the vinylaromatic copolymer C, of at least one thermoplastic vinylaromatic copolymer C1. Often, the post-consumer recycled vinylaromatic copolymer C comprises less than 5 wt.-% of the impact-modifying polymer C2, based on the total weigh of the vinylaromatic copolymer C, often less than 1 wt.-%, for example less than 0.1 wt.-%.

The non-post-consumer recycled (virgin) vinylaromatic copolymer C often comprises additives, which are conventionally used to adjust the properties of the vinylaromatic copolymer C to improve the processability, the performance characteristics and/or the visual appearance. Examples of such additives include demolding agents, lubricants, flame retardants, colorants, dyes, pigments, fillers, plasticizers, which are generally known in the art and described in the literature (see e.g. "Plastics Additives Handbook", Hans Zweifel, 6th edition, Hanser Publ., Munich, 2009).

For the purpose of the invention, all additives account to the total weight of the non-post-consumer recycled (virgin) vinylaromatic copolymer C, i.e. any weight specification for the post-consumer recycled polymer A given herein refers to the non-post-consumer recycled (virgin) vinylaromatic copolymer C as such including the vinylaromatic copolymer C and all optional additives (and/or optional impurities) present therein.

Methods for producing the non-post-consumer recycled (virgin) vinylaromatic copolymer C are generally known in the art, and are, for example described by Maul et al. in "Polystyrene and Styrene Copolymers" in Ullmann's Encyclopedia of Industrial Chemistry. Wiley-VCH Verlag GmbH & Co. KGaA, 2005.

### Additive Component D

The polymer composition P may optionally comprise up to 10 parts by weight of at least one further component D.

Suitable additives D include all substances customarily employed for processing or finishing the polymers (see e.g. "Plastics Additives Handbook", Hans Zweifel, 6th edition, Hanser Publ., Munich, 2009).

Preferred additives D include stabilizers (e.g. UV-stabilizers), oxidation retarders, antioxidants, agents to counter thermal decomposition and decomposition due to light, lubricants and dyes.

These additives D may be admixed at any stage of the manufacturing operation, but preferably at an early stage in order to profit early on from the stabilizing effects (or other specific effects) of the added substance.

Suitable antioxidants are, e.g., one or more compounds selected from mono-phosphite-based antioxidants, di-phosphite-based antioxidants and sterically hindered phenolic antioxidants. If one or more antioxidants are present, they are preferably selected from mono-phosphite-based antioxidants, such as tri-substituted mono-phosphite derivatives, di-phosphite-based antioxidants, such as substituted pentaerythritol di-phosphite derivatives and sterically hindered phenolic antioxidants, such as 2,6-di-tertbutylphenolic derivatives.

Suitable lubricants/glidants and demolding agents include stearic acids, stearyl alcohol, stearic esters, amide waxes (bis-stearylamide, in particular ethylene bis-stearamide), polyolefin waxes and/or generally higher fatty acids, derivatives thereof and corresponding fatty acid mixtures comprising 12 to 30 carbon atoms.

Suitable dyes are any of the dyes which can be used for transparent, semitransparent, or non-transparent coloring of polymers, in particular those dyes which are suitable for coloring styrene copolymers. Dyes of this type are known to the skilled worker. Examples of suitable pigments are titanium dioxide, phthalocyanines, ultramarine blue, iron oxides, or carbon black, and also the entire class of organic pigments. In one embodiment, no pigments are used as additives D.

Examples of optional fillers may be selected from particulate fillers or reinforcing agents, are silicates, amorphous silica, calcium silicates, such as wollastonite, powdered quartz, mica, metal oxides, metal hydroxides, carbon black, graphite, barium sulfate, calcium carbonate, magnesium carbonate, bentonites, talc, kaolin, carbon fibers or glass fibers in the form of glass woven, glass mats, or glass silk rovings, chopped glass, or glass beads. In one embodiment, no fillers are used as additives D.

Examples of oxidation retarders and heat stabilizers are halides of the metals from group I of the periodic table, examples being sodium, potassium and/or lithium halides, optionally in combination with copper (I) halides, e.g., chlorides, bromides, iodides, sterically hindered phenols, hydroquinones, different substituted representatives of these groups, and mixtures thereof.

Examples of suitable stabilizers to counter the effect of light (e.g UV-stabilizers) are various substituted resorcinols, salicylates, benzotriazoles, benzophenones, and HALS (hindered amine light stabilizers), for example those commercially available as Tinuvin^{®}.

### Polymer Composition P

The inventive polymer composition P at least comprises 0.1 to 50 parts by weight of at least one post-consumer recycled polymer as component A and 50 to 99.9 parts by weigh of at least one post-consumer recycled vinylaromatic copolymer as component B as defined herein above,
wherein the post-consumer recycled polymer A is dissolved in the vinylaromatic copolymer B and optionally vinylaromatic copolymer C, and/or
wherein the post-consumer recycled polymer A is dispersed in form of discontinuous phase domains in a continuous phase of the vinylaromatic copolymer B and optionally vinylaromatic copolymer C and wherein the discontinuous phase of the post-consumer recycled polymer A at least comprises phase domains having an average diameter in the range of > 30 nm to ≤ 5 µm, preferably > 30 nm to ≤ 2 µm, more preferably > 30 nm to ≤ 200 nm, often > 30 nm to ≤ 100 nm.

According to a preferred embodiment of the invention, the post-consumer recycled polymer A is dispersed in form of discontinuous phase domains in a continuous phase of the vinylaromatic copolymer B and optionally vinylaromatic copolymer C, and wherein the discontinuous phase of the post-consumer recycled polymer A comprises:
(i) phase domains having an average diameter in the range of from > 30 nm to ≤ 5 µm, preferably > 30 nm to ≤ 2 µm, more preferably > 30 nm to ≤ 200 nm, often > 30 nm to ≤ 100 nm, and
(ii) optionally phase domains having an average diameter in the range of from > 0.1 to 30 nm.

The post-consumer recycled polymer A and the post-consumer recycled vinylaromatic polymer B are selected from different polymer classes. The vinylaromatic copolymer B and vinylaromatic copolymer C may be the same or different from each other, e.g. the vinylaromatic copolymer B and vinylaromatic copolymer C may be selected from the same polymer class or from different polymer classes. In one embodiment, the vinylaromatic copolymer B and the vinylaromatic copolymer C are selected from the same polymer class. In an alternative embodiment, the vinylaromatic copolymer B and the vinylaromatic copolymer C are selected from different polymer classes. Suitable polymer classes are defined herein above.

In one embodiment, the polymer composition P comprises at least two different polymer classes as the post-consumer recycled polymer A. In one preferred embodiment, the post-consumer recycled polymer A comprises at least two different polymer classes different from the post-consumer recycled vinylaromatic polymer B.

Preferred embodiments of the invention include polymer compositions P as described herein, comprising:
(a) at least one PMMA as component A and at least one SAN as component B;
(b) at least one PMMA as component A and at least one ABS as component B;
(c) at least one PMMA as component A and at least one ASA as component B;
(d) at least one TPU as component A and at least one SAN as component B;
(e) at least one TPU as component A and at least one ABS as component B;
(f) at least one TPU as component A and at least one ASA as component B;
(g) at least one AMSAN as component A and at least one SAN as component B;
(h) at least one AMSAN as component A and at least one ABS as component B;
(i) at least one AMSAN as component A and at least one ASA as component B;
(j) at least one PC as component A and at least one SAN as component B;
(k) at least one PC as component A and at least one ABS as component B;
(l) at least one PC as component A and at least one ASA as component B;
(m) at least one PA as component A and at least one SAN as component B;
(n) at least one PA as component A and at least one ABS as component B;
(o) at least one PA as component A and at least one ASA as component B;
or combinations of the aforementioned.

In one embodiment, the polymer compositions P comprise:
(a) at least one PMMA as component A and at least one SAN as component B;
(d) at least one TPU as component A and at least one SAN as component B;
(g) at least one AMSAN as component A and at least one SAN as component B;
(j) at least one PC as component A and at least one SAN as component B;
(m) at least one PA as component A and at least one SAN as component B;
or combinations of the aforementioned.

### Process for recycling

The invention further relates to a process for the mechanical recycling of post-consumer recycled polymers A, wherein the process comprises the following process steps:
(i) providing at least one post-consumer recycled polymer A,
(ii) providing at least one (post-consumer recycled) vinylaromatic copolymer B,
(iii) optionally providing at least one non-post-consumer recycled vinylaromatic copolymer C,
(iv) optionally providing further additives D,
(v) melt-mixing 0.1 to 50 parts by weight, preferably 1 to 50 parts by weight of at least one post-consumer recycled polymer A, 50 to 99.9 parts by weight, preferably 50 to 99 parts by weight of the at least one post-consumer recycled vinylaromatic copolymer B and optionally 0 to 200 parts by weight of an essentially non-post-consumer recycled vinylaromatic copolymer C, optionally in the presence of 0 to 10 parts by weight of at least one further additive as component D,
(vi) extruding the melt-mixture obtained in process step (v),

wherein the post-consumer recycled polymer A and the vinylaromatic polymer B are selected from different polymer classes,
wherein the post-consumer recycled polymer A comprises at least one polymer selected from polyamides, polycarbonates, thermoplastic polyurethanes, polyalkyl(meth)acrylates, polyvinylchlorides, polystyrene, vinylaromatic-acrylonitrile copolymers, alpha-methylstyrene-acrylonitrile copolymers, vinylaromatic-diene-acrylonitrile copolymers, and vinylaromatic-acrylate copolymers,
wherein the at least one post-consumer recycled vinylaromatic copolymer component B comprises:
   B1: 10 to 100 wt.-% of at least one thermoplastic vinylaromatic copolymer B1, comprising:
      B1.1: 1 to 81 wt.-% of repeating units of styrene,
      B1.2: 19 to 35 wt.-% of repeating units of acrylonitrile,
      B1.3: 0 to 80 wt.-% of repeating units of at least one monomer selected from methyl(meth)acrylate (MMA), maleic anhydride (MA), and N-phenyl-maleimide (n-PMI),
      B1.4: 0 to 20 wt.-% of repeating units of at least one further co-monomer different from B1.1, B1.2 and B1.3;
   wherein B1.1, B1.2, B1.3 and B1.4 sum up to 100 wt.-% of the thermoplastic vinylaromatic copolymer B1;
      and
   B2: 0 to 90 wt.-% of at least one impact-modifying polymer B2;
   wherein B1 and B2 sum up to 100 wt.-% of the vinylaromatic copolymer B;
   and wherein the post-consumer recycled polymer component A and the post-consumer recycled vinylaromatic copolymer component B are prepared from waste plastic material.

The process employs at least one post-consumer recycled vinylaromatic copolymer B and at least one post-consumer recycled polymer A which are different from each other.

More preferably, the process employs at least two different post-consumer recycled polymers A. The post-consumer recycled polymer A comprises at least one polymer selected from the group consisting of polycarbonates (PC), thermoplastic polyurethanes (TPU), polyalkyl(meth)acrylates, in particular polymethyl(meth)acrylate (PMMA), polyvinylchlorides (PVC), polystyrene (PS) and vinylaromatic copolymers such as vinylaromatic-acrylonitrile copolymers (e.g. styrene-acrylonitrile copolymers (SAN) and alpha-methylstyrene-acrylonitrile copolymers (AMSAN)), vinylaromatic-diene-acrylonitrile copolymers (e.g. poly(acrylonitrile-butadiene-styrene) (ABS)) or vinylaromatic-acrylate copolymers (e.g. poly(acrylonitrile-styrene-acrylic ester) (ASA)).

The post-consumer recycled vinylaromatic copolymer B is preferably selected from the group consisting of styrene-acrylonitrile copolymers, blends of mixtures of at least one styrene-acrylonitrile copolymer with poly(acrylonitrile-butadiene-styrene) (ABS) or poly(acrylonitrile-styrene-acrylic ester) (ASA), and mixtures thereof.

A further aspect of the invention is a process for the preparation of a polymer composition P according to the invention by melt-mixing of components A, B and, if present, components C and/or D. Preferably the melt-mixing of the components A, B and, if present, components C and/or D is performed in an extruder, preferably a twin screw extruder.

The melt-mixing may be performed, preferably in an extruder, at temperatures in the range of from 160 to 260 °C. Preferably, melt-mixing is performed in an extruder at temperatures in the range of from 180 to 230 °C.

### Use and Applications

The invention also relates a method of using a post-consumer recycled vinylaromatic copolymer B for preparing a polymer composition P comprising at least one post-consumer recycled polymer A, wherein the post-consumer recycled polymer A is dissolved in the post-consumer recycled vinylaromatic copolymer B, or wherein the post-consumer recycled polymer A is dispersed in form of discontinuous phase domains in a continuous phase of the post-consumer recycled vinylaromatic copolymer B and wherein the discontinuous phase of the post-consumer recycled polymer A at least comprises phase domains having an average diameter in the range of > 30 nm to ≤ 5 µm, preferably > 30 nm to ≤ 2 µm, more preferably > 30 nm to ≤ 200 nm, often > 30 nm to ≤ 100 nm,
wherein the post-consumer recycled polymer A and the vinylaromatic polymer B are selected from different polymer classes,
wherein the post-consumer recycled polymer A comprises at least one polymer selected from polyamides, polycarbonates, thermoplastic polyurethanes, polyalkyl(meth)acrylates, polyvinylchlorides, polystyrene, vinylaromatic-acrylonitrile copolymers, alpha-methylstyrene-acrylonitrile copolymers, vinylaromatic-diene-acrylonitrile copolymers, and vinylaromatic-acrylate copolymers,
wherein the at least one post-consumer recycled vinylaromatic copolymer component B comprises:
   B1: 10 to 100 wt.-% of at least one thermoplastic vinylaromatic copolymer B1, comprising:
      B1.1: 1 to 81 wt.-% of repeating units of styrene,
      B1.2: 19 to 35 wt.-% of repeating units of acrylonitrile,
      B1.3: 0 to 80 wt.-% of repeating units of at least one monomer selected from methyl(meth)acrylate (MMA), maleic anhydride (MA), and N-phenyl-maleimide (n-PMI),
      B1.4: 0 to 20 wt.-% of repeating units of at least one further co-monomer different from B1.1, B1.2 and B1.3;
   wherein B1.1, B1.2, B1.3 and B1.4 sum up to 100 wt.-% of the thermoplastic vinylaromatic copolymer B1;
      and
   B2: 0 to 90 wt.-% of at least one impact-modifying polymer B2;
   wherein B1 and B2 sum up to 100 wt.-% of the vinylaromatic copolymer B;
   and wherein the post-consumer recycled polymer component A and the post-consumer recycled vinylaromatic copolymer component B are prepared from waste plastic material.

In a further aspect, the invention also relates to a process for the recycling of post-consumer polymers comprising at least one polymer A, wherein the post-consumer recycled polymer A is dissolved in the post-consumer recycled vinylaromatic copolymer B or wherein the post-consumer recycled polymer A is dispersed in form of discontinuous phase domains in a continuous phase of the post-consumer recycled vinylaromatic copolymer B and wherein the discontinuous phase of the post-consumer recycled polymer A at least comprises phase domains having an average diameter in the range of > 30 nm to ≤ 5 µm, preferably > 30 nm to ≤ 2 µm, more preferably > 30 nm to ≤ 200 nm, often > 30 nm to ≤ 100 nm.

Thus, in other words, the invention also relates to the use of a post-consumer recycled vinylaromatic copolymer B for preparing a polymer composition P comprising at least one post-consumer recycled polymer A, wherein the post-consumer recycled polymer A is dissolved in the post-consumer recycled vinylaromatic copolymer B or wherein the post-consumer recycled polymer A is dispersed in form of discontinuous phase domains in a continuous phase of the post-consumer recycled vinylaromatic copolymer B and wherein the discontinuous phase of the post-consumer recycled polymer A at least comprises phase domains having an average diameter in the range of > 30 nm to ≤ 5 µm, preferably > 30 nm to ≤ 2 µm, more preferably > 30 nm to ≤ 200 nm, often > 30 nm to ≤ 100 nm.

The invention also relates to the use of a post-consumer recycled vinylaromatic copolymer B for improving the compatibility of post-consumer recycled polymers A in a polymer composition P according to the invention, wherein the post-consumer recycled polymer A is dissolved in the post-consumer recycled vinylaromatic copolymer B or wherein the post-consumer recycled polymer A is dispersed in form of discontinuous phase domains in a continuous phase of the post-consumer recycled vinylaromatic copolymer B and wherein the discontinuous phase of the post-consumer recycled polymer A at least comprises phase domains having an average diameter in the range of > 30 nm to ≤ 5 µm, preferably > 30 nm to ≤ 2 µm, more preferably > 30 nm to ≤ 200 nm, often > 30 nm to ≤ 100 nm.

The constituents A, B, C, and D as well as the polymer composition P and the preferred embodiments thereof are as defined above.

The polymer composition P obtained by said process shows a good processability and thus can be easily processed, i.e. molded to any desired shape e.g. by extrusion and hot molding (e.g. injection molding).

Accordingly, a further aspect of the invention is a shaped article produced from the polymer composition P according to the invention.

The polymer composition P according to the invention can advantageously be used for many applications, including automotive parts such as mirrors, instrument panels, front grills, rear lights and light housings, door panels, center consoles, knobs and other instrument panel components, car interior upper and lower trims, seat components, spoilers, electroplated parts, fascia and mounting brackets; 2-wheeler parts such as side covers, indicators and indicator housings, lamps and lamp housings, tank embellishers, front fenders, seat cowls; computer/communication applications such as parts for cell phones, smart phones, tablet computers, stationary computers, GPS devices, landline telephones, telefax machines, antennae and communication systems; TV/monitor applications such as light diffuser plates (LDP), light guide panels (LGP), front, middle & rear covers, guide stand necks, stand bases; sports/leisure applications such as parts for game consoles, audio and video devices, E-book readers, walkie talkie systems, E-music instruments, E-bikes, sound systems; office equipment applications such as printer, copier & scanner housing parts, paper trays, feeders, separators and exterior parts, document backing, light pipes, transparent photo trays, printer drum units, printer platens, ink and toner cartridges; general electronic applications such as electrical installations, plugs and switches, battery housings, payment devices, house electronics (home safety and communication systems); kitchen applications such as parts for refrigerators, coolers, dishwashers, microwave ovens, cookers, exhaust fans (extraction units), coffee machines, toasters, mixers, blenders, filtered water containers; laundry room applications such as parts for washing machines, dryers, irons; personal hygiene applications such as parts for electric toothbrushes, electric razors/shavers, hair dryers, electroplated parts in sanitary applications like showerheads, knobs; general household applications such as parts for vacuum cleaners, carpet washers, air conditioners, air cleaners, humidifiers/de-humidifiers, water purifiers; building and construction applications such as decking/deck boards, fencing/railing, roofing/roof tiles, exterior siding/cladding, exterior trims, soffit linings, storm doors, door panels, window profiles, solar-panel support mounts, water drainage, sunroom walls, outdoor pool steps, decorative sheets, edge bands, exterior films, flooring, sanitary applications, shower trays, high-heat piping/ducts, window frame inner structures, solar panel housings, gutters, blending with PVC for improving heat resistance, impact strength and color retention; additional capstock applications over exterior PVC applications, parts for windmills/renewable energy production, insulation panels; medical/healthcare applications such as parts for IV systems and fluid delivery, IV tubing, lumen tubes, co-ex tubes, IV bags, IV drip chambers, spikes, connectors (rigid/flexible, Y, valves), stopcocks, rollerclamps, dialyzers, blood filters and reservoirs, diabetes devices and packaging, e.g. injection pens; labware such as titer plates, petri dishes, pipettes, sample spoons, cell growth bottles, cuvettes, centrifuge tubes, caps and closures, anesthesia-, blood analysis trays, diagnostic test kits, retinal surgery cassette, surgical instruments, handle grips, vaginal specular, electro surgical pencils, trocars, arthroscopes, endoscopes, microlaparoscopy instruments, anesthesia devices, endoscopy tube and parts, prosthesis; respiratory and drug delivery applications such as parts for inhalers, sleep apnea devices, insulin pens, insulin pumps, injection pens, needleless injection devices, syringes, nebulizers; mobile and digital health applications such as parts for medical monitoring, diagnostic systems, CT scanners, blood pressure monitors, thermometers, pulse oximeters; fitness devices, glucometers, AED, ultrasound instruments, wireless-, remote devices, medical trays, pouches, blisters, films, overwraps, film/multi layer film applications; packaging and other applications such as food packaging, technical packaging, containers, integrated circuit packaging, cosmetics packaging, household goods packaging, household sprayer and dispenser parts, foamed packaging and foamed trays, cosmetic jars, industrial batteries, water filter parts, food boxes, point-of-purchase displays, , pens, toys, toy bricks and toy housings, toy figures, films.

A further object of the invention is the use of polymer composition P according to the invention and shaped articles produced therefrom for various applications as mentioned above.

The examples and the patent claims further illustrate the invention.

### Examples

In a mechanical recycling test, a series of polymers A-(i) to A-(viii) was blended with each other and with styrene (B-(i)) as well as with the vinylaromatic copolymers B-(ii) to B-(v):

| | |
|---|---|
| A-(i) | homo-polypropylene (not according to the invention) |
| A-(ii) | low density polyethylene (not according to the invention) |
| A-(iii) | polycarbonate (Makrolon 2800; Covestro) |
| A-(iv) | thermoplastic polyurethane (Elastollan; BASF) |
| A-(v) | polymethyl(meth)acrylate (Plexiglas 6N, Röhm) |
| A-(vi) | styrene-butadiene copolymer (Styrolux G55; INEOS Styrolution) (not according to the invention) |
| A-(vii) | polyethylene terephthalate (ground PET bottle grade) (not according to the invention) |
| A-(viii) | polyvinylchloride (Inovyn 264PC) |
| B-(i) | polystyrene (Polystyrene 158 N, INEOS Styrolution) (reference example) |
| B-(ii) | styrene-acrylonitrile copolymer (S/AN 81/19) |
| B-(iii) | styrene-acrylonitrile copolymer (S/AN 75/25) |
| B-(iv) | styrene-acrylonitrile copolymer (S/AN 65/35) |
| B-(v) | styrene-acrylonitrile copolymer (S/AN 60/40) (not according to the invention) |

Extrusion compounding trials were run with blends having a 1:1 weight ratio (according to Table 1) under following conditions:

| | |
|---|---|
| extruder: | Coperion ZSK 30 |
| temperature: | 260 °C |
| number of revolutions[l/min] | 200 - 300 |
| throughput | 10 kg/h |

Test of compatibility was done by investigating the micro- or macro-phase separation via optical microscopy on a 50 µm x 50 µm photograph using following assessment scheme:
+ (good compatibility): polymer domain size on average 2 µm or below
0 (mediocre compatibility): polymer domain size on average 20 µm or below
- (poor/no compatibility): no visible miscibility / domain size > 20 µm

The results are presented in Table 1.

**Table 1: Mechanical recycling trials**

| | A-(i)** | A-(ii)** | A-(iii) | A-(iv) | A-(v) | A-(vi) ** | A-(vii) ** | A-(viii) |
|---|---|---|---|---|---|---|---|---|
| A-(i)** | n/a | 0 | - | - | - | 0 | - | - |
| A-(ii)** | 0 | n/a | - | - | - | 0 | - | - |
| A-(iii) | - | - | n/a | + | + | 0 | 0 | 0 |
| A-(iv) | - | - | + | n/a | 0 | - | 0 | 0 |
| A-(v) | - | - | + | 0 | n/a | 0 | 0 | 0 |
| A-(vi) ** | 0 | 0 | 0 | - | 0 | n/a | 0 | 0 |
| A-(vii) ** | - | - | 0 | 0 | 0 | 0 | n/a | 0 |
| A-(viii) | - | - | 0 | 0 | 0 | 0 | 0 | n/a |
| B-(i)* | - | - | + | + | - | + | - | - |
| B-(ii) | - | - | + | + | + | 0 | - | + |
| B-(iii) | - | - | + | + | + | 0 | - | + |
| B-(iv) | - | - | + | + | + | 0 | - | + |
| B-(v)** | - | - | + | + | 0 | - | 0 | 0 |

| | | | | | | | | |
|---|---|---|---|---|---|---|---|---|
| * Reference example ** not according to the invention | | | | | | | | |

As can be seen from the data presented in Table 1, polymer compositions P comprising vinylaromatic copolmyers B-(ii) to B-(v) exhibit good or mediocre compabitility with various different polymers, such as polymers (A-iii) to (A-vi) and (A-viii), in particular (A-iii), (A-iv), (A-v) and (A-viii).

## Claims

1. Polymer composition P comprising:
A: 0.1 to 50 parts by weight of at least one post-consumer recycled polymer as component A;
B: 50 to 99.9 parts by weight of at least one post-consumer recycled vinylaromatic copolymer as component B, comprising:
B1: 10 to 100 wt.-% of at least one thermoplastic vinylaromatic copolymer B1, comprising:
B1.1: 1 to 81 wt.-% of repeating units of styrene,
B1.2: 19 to 35 wt.-% of repeating units of acrylonitrile,
B1.3: 0 to 80 wt.-% of repeating units of at least one monomer selected from methyl(meth)acrylate (MMA), maleic anhydride (MA), and N-phenyl-maleimide (n-PMI),
B1.4: 0 to 20 wt.-% of repeating units of at least one further co-monomer different from B1.1, B1.2 and B1.3;
wherein B1.1, B1.2, B1.3 and B1.4 sum up to 100 wt.-% of the thermoplastic vinylaromatic copolymer B1;
and
B2: 0 to 90 wt.-% of at least one impact-modifying polymer B2;
wherein B1 and B2 sum up to 100 wt.-% of the vinylaromatic copolymer B;
C: 0 to 200 parts by weight of a non-post-consumer recycled (virgin) vinylaromatic copolymer as component C, comprising:
C1: 10 to 100 wt.-% of at least one thermoplastic vinylaromatic copolymer C1, comprising:
C1.1: 1 to 81 wt.-% of repeating units of styrene and/or styrene derivatives,
C1.2: 19 to 35 wt.-% of repeating units of acrylonitrile and / or methacrylonitrile,
C1.3: 0 to 80 wt.-% of repeating units of at least one monomer selected from methyl(meth)acrylate (MMA), maleic anhydride (MA), and N-phenyl-maleimide (n-PMI),
C1.4: 0 to 20 wt.-% of repeating units of at least one further co-monomer different from C1.1, C1.2 and C1.3;
wherein C1.1, C1.2, C1.3 and C1.4 sum up to 100 wt.-% of the thermoplastic vinylaromatic copolymer C1;
and
C2: 0 to 90 wt.-% of at least one impact-modifying polymer C2;
wherein C1 and C2 sum up to 100 wt.-% of the non-post-consumer recycled (virgin) vinylaromatic copolymer C;
and
D: 0 to 10 parts by weight of at least one further additive as component D;
wherein components A, B, C and D sum up to 100 wt.-% of the polymer composition P;
and
wherein the post-consumer recycled polymer A is dissolved in the vinylaromatic copolymer B and optionally vinylaromatic copolymer C, and/or
wherein the post-consumer recycled polymer A is dispersed in form of discontinuous phase domains in a continuous phase of the vinylaromatic copolymer B and optionally vinylaromatic copolymer C and wherein the discontinuous phase of the post-consumer recycled polymer A at least comprises phase domains having an average diameter in the range of > 30 nm to ≤ 5 µm, preferably > 30 nm to ≤ 2 µm, more preferably > 30 nm to ≤ 200 nm, often > 30 nm to ≤ 100 nm,
wherein the post-consumer recycled polymer A and the post-consumer recycled vinylaromatic polymer B are selected from different polymer classes,
wherein the post-consumer recycled polymer A comprises at least one polymer selected from polyamides, polycarbonates, thermoplastic polyurethanes, polyalkyl(meth)acrylates, polyvinylchlorides, polystyrene, vinylaromatic-acrylonitrile copolymers, alpha-methylstyrene-acrylonitrile copolymers, vinylaromatic-diene-acrylonitrile copolymers, and vinylaromatic-acrylate copolymers,
and wherein the post-consumer recycled polymer component A and the post-consumer recycled vinylaromatic copolymer component B are prepared from waste plastic material.

2. Polymer composition P according to claim 1, wherein the post-consumer recycled polymer A is dispersed in form of discontinuous phase domains in a continuous phase of the vinylaromatic copolymer B and optionally vinylaromatic copolymer C, and wherein the discontinuous phase of the post-consumer recycled polymer A comprise:
(i) phase domains having an average diameter in the range of > 30 nm to ≤ 5 µm, preferably > 30 nm to ≤ 2 µm, more preferably > 30 nm to ≤ 200 nm, often > 30 nm to ≤ 100 nm and
(ii) optionally phase domains having an average diameter in the range of > 0.1 to 30 nm.

3. Polymer composition P according to claim 1 or 2, wherein the post-consumer recycled polymer A comprises at least one polymer selected from thermoplastic polyurethanes (TPU), polymethyl(meth)acrylates (PMMA), polyamide (PA), polycarbonates (PC), alpha-methylstyrene-acrylonitrile copolymers (AMSAN) and polystyrenes (PS).

4. Polymer composition P according to any of claims 1 to 3, wherein the post-consumer recycled vinylaromatic copolymer B is selected from the group consisting of styrene-acrylonitrile copolymers, blends of mixtures of at least one styrene-acrylonitrile copolymers with poly(acrylonitrile-butadiene-styrene) (ABS) or poly(acrylonitrile-styrene-acrylic ester) (ASA), and mixtures thereof.

5. Polymer composition P according to any of claims 1 to 4, wherein the polymer composition comprises:
(a) at least one PMMA as component A and at least one SAN as component B;
(b) at least one PMMA as component A and at least one ABS as component B;
(c) at least one PMMA as component A and at least one ASA as component B;
(d) at least one TPU as component A and at least one SAN as component B;
(e) at least one TPU as component A and at least one ABS as component B;
(f) at least one TPU as component A and at least one ASA as component B;
(g) at least one AMSAN as component A and at least one SAN as component B;
(h) at least one AMSAN as component A and at least one ABS as component B;
(i) at least one AMSAN as component A and at least one ASA as component B;
(j) at least one PC as component A and at least one SAN as component B;
(k) at least one PC as component A and at least one ABS as component B;
(l) at least one PC as component A and at least one ASA as component B;
(m) at least one PA as component A and at least one SAN as component B;
(n) at least one PA as component A and at least one ABS as component B;
(o) at least one PA as component A and at least one ASA as component B;
or combinations of the aforementioned.

6. Process for the mechanical recycling of post-consumer recycled polymers A, wherein the process comprises the following process steps:
(i) providing at least one post-consumer recycled polymer A,
(ii) providing at least one vinylaromatic copolymer B,
(iii) optionally providing at least one non-post-consumer recycled vinylaromatic copolymer C,
(iv) optionally providing further additives D,
(v) melt-mixing 0.1 to 50 parts by weight of at least one post-consumer recycled polymer A, 50 to 99.9 parts by weight of the at least one post-consumer recycled vinylaromatic copolymer B and optionally 0 to 200 parts by weight of an essentially non-post-consumer recycled vinylaromatic copolymer C, optionally in the presence of 0 to 10 parts by weight of at least one further additive as component D,
(vi) extruding the melt-mixture obtained in process step (v),
wherein the post-consumer recycled polymer A and the vinylaromatic polymer B are selected from different polymer classes,
wherein the post-consumer recycled polymer A comprises at least one polymer selected from polyamides, polycarbonates, thermoplastic polyurethanes, polyalkyl(meth)acrylates, polyvinylchlorides, polystyrene, vinylaromatic-acrylonitrile copolymers, alpha-methylstyrene-acrylonitrile copolymers, vinylaromatic-diene-acrylonitrile copolymers, and vinylaromatic-acrylate copolymers,
wherein the at least one post-consumer recycled vinylaromatic copolymer component B comprises:
B1: 10 to 100 wt.-% of at least one thermoplastic vinylaromatic copolymer B1, comprising:
B1.1: 1 to 81 wt.-% of repeating units of styrene,
B1.2: 19 to 35 wt.-% of repeating units of acrylonitrile,
B1.3: 0 to 80 wt.-% of repeating units of at least one monomer selected from methyl(meth)acrylate (MMA), maleic anhydride (MA), and N-phenyl-maleimide (n-PMI),
B1.4: 0 to 20 wt.-% of repeating units of at least one further co-monomer different from B1.1, B1.2 and B1.3;
wherein B1.1, B1.2, B1.3 and B1.4 sum up to 100 wt.-% of the thermoplastic vinylaromatic copolymer B1;
and
B2: 0 to 90 wt.-% of at least one impact-modifying polymer B2;
wherein B1 and B2 sum up to 100 wt.-% of the vinylaromatic copolymer B;
and wherein the post-consumer recycled polymer component A and the post-consumer recycled vinylaromatic copolymer component B are prepared from waste plastic material.

7. Process according to claim 6, wherein the at least one post-consumer recycled vinylaromatic copolymer B is different from the at least one post-consumer recycled polymer A.

8. Process according to claim 6 or 7, wherein the post-consumer recycled polymer A and the post-consumer recycled vinylaromatic polymer B are selected from different polymer classes.

9. Process according to any of claims 6 to 8, wherein the post-consumer recycled polymer A comprises at least one polymer selected from the group consisting of selected from thermoplastic polyurethanes (TPU), polymethyl(meth)acrylates (PMMA), polyamide (PA), polycarbonates (PC), alpha-methylstyrene-acrylonitrile copolymers (AMSAN) and polystyrenes (PS).

10. Process according to any of claims 6 to 9, wherein the post-consumer recycled vinylaromatic copolymer B is selected from the group consisting of styrene-acrylonitrile copolymers, blends of mixtures of at least one styrene-acrylonitrile copolymers with poly(acrylonitrile-butadiene-styrene) (ABS) or poly(acrylonitrile-styrene-acrylic ester) (ASA), and mixtures thereof.

11. Use of a post-consumer recycled vinylaromatic copolymer B for preparing a polymer composition P comprising at least one post-consumer recycled polymer A, wherein the post-consumer recycled polymer A is dissolved in the post-consumer recycled vinylaromatic copolymer B or wherein the post-consumer recycled polymer A is dispersed in form of discontinuous phase domains in a continuous phase of the post-consumer recycled vinylaromatic copolymer B and wherein the discontinuous phase of the post-consumer recycled polymer A at least comprises phase domains having an average diameter in the range of > 30 nm to ≤ 5 µm, preferably > 30 nm to ≤ 2 µm, more preferably > 30 nm to ≤ 200 nm, often > 30 nm to ≤ 100 nm,
wherein the post-consumer recycled polymer A and the vinylaromatic polymer B are selected from different polymer classes,
wherein the post-consumer recycled polymer A comprises at least one polymer selected from polyamides, polycarbonates, thermoplastic polyurethanes, polyalkyl(meth)acrylates, polyvinylchlorides, polystyrene, vinylaromatic-acrylonitrile copolymers, alpha-methylstyrene-acrylonitrile copolymers, vinylaromatic-diene-acrylonitrile copolymers, and vinylaromatic-acrylate copolymers,
wherein the at least one post-consumer recycled vinylaromatic copolymer component B comprises:
B1: 10 to 100 wt.-% of at least one thermoplastic vinylaromatic copolymer B1, comprising:
B1.1: 1 to 81 wt.-% of repeating units of styrene,
B1.2: 19 to 35 wt.-% of repeating units of acrylonitrile,
B1.3: 0 to 80 wt.-% of repeating units of at least one monomer selected from methyl(meth)acrylate (MMA), maleic anhydride (MA), and N-phenyl-maleimide (n-PMI),
B1.4: 0 to 20 wt.-% of repeating units of at least one further co-monomer different from B1.1, B1.2 and B1.3;
wherein B1.1, B1.2, B1.3 and B1.4 sum up to 100 wt.-% of the thermoplastic vinylaromatic copolymer B1;
and
B2: 0 to 90 wt.-% of at least one impact-modifying polymer B2;
wherein B1 and B2 sum up to 100 wt.-% of the vinylaromatic copolymer B;
and wherein the post-consumer recycled polymer component A and the post-consumer recycled vinylaromatic copolymer component B are prepared from waste plastic material.

12. Use according to claim 11, wherein the post-consumer recycled polymer A and the post-consumer recycled vinylaromatic polymer B are selected from different polymer classes.

13. Use according to claim 11 or 12, wherein the polymer composition P comprises:
(a) at least one PMMA as component A and at least one SAN as component B;
(b) at least one PMMA as component A and at least one ABS as component B;
(c) at least one PMMA as component A and at least one ASA as component B;
(d) at least one TPU as component A and at least one SAN as component B;
(e) at least one TPU as component A and at least one ABS as component B;
(f) at least one TPU as component A and at least one ASA as component B;
(g) at least one AMSAN as component A and at least one SAN as component B;
(h) at least one AMSAN as component A and at least one ABS as component B;
(i) at least one AMSAN as component A and at least one ASA as component B;
(j) at least one PC as component A and at least one SAN as component B;
(k) at least one PC as component A and at least one ABS as component B;
(l) at least one PC as component A and at least one ASA as component B;
(m) at least one PA as component A and at least one SAN as component B;
(n) at least one PA as component A and at least one ABS as component B;
(o) at least one PA as component A and at least one ASA as component B;
or combinations of the aforementioned.

## Patentansprüche

1. Polymerzusammensetzung P umfassend:
A: 0,1 bis 50 Gewichtsteile mindestens eines rezyklierten Post-Consumer-Polymers als Komponente A;
B: 50 bis 99,9 Gewichtsteile mindestens eines rezyklierten vinylaromatischen Copolymers als Komponente B, umfassend:
B1: 10 bis 100 Gew.-% mindestens eines thermoplastischen vinylaromatischen Copolymers B1, umfassend:
B1.1: 1 bis 81 Gew.-% Styrol-Wiederholungseinheiten,
B1.2: 19 bis 35 Gew.-% Acrylnitril-Wiederholungseinheiten,
B1.3: 0 bis 80 Gew.-% Wiederholungseinheiten mindestens eines Monomers, ausgewählt aus Methyl(meth)acrylat (MMA), Maleinsäureanhydrid (MA) und N-Phenylmaleinimid (n-PMI),
B1.4: 0 bis 20 Gew.-% Wiederholungseinheiten mindestens eines weiteren, von B1.1, B1.2 und B1.3 verschiedenen Comonomers;
wobei B1.1, B1.2, B1.3 und B1.4 zusammen 100 Gew.-% des thermoplastischen vinylaromatischen Copolymers B1 ausmachen;
und
B2: 0 bis 90 Gew.-% mindestens eines schlagzäh-modifizierenden Polymers B2;
wobei B1 und B2 zusammen 100 Gew.-% des vinylaromatischen Copolymers B ausmachen;
C: 0 bis 200 Gewichtsteile eines nicht aus Post-Consumer-Recycling stammenden (neuen) vinylaromatischen Copolymers als Komponente C, umfassend:
C1: 10 bis 100 Gew.-% mindestens eines thermoplastischen vinylaromatischen Copolymers C1, umfassend:
C1.1: 1 bis 81 Gew.-% Wiederholungseinheiten von Styrol und/oder Styrolderivaten,
C1.2: 19 bis 35 Gew.-% Wiederholungseinheiten von Acrylnitril und/oder Methacrylnitril,
C1.3: 0 bis 80 Gew.-% Wiederholungseinheiten mindestens eines Monomers, ausgewählt aus Methyl(meth)acrylat (MMA), Maleinsäureanhydrid (MA) und N-Phenylmaleinimid (n-PMI),
C1.4: 0 bis 20 Gew.-% Wiederholungseinheiten mindestens eines weiteren, von C1.1, C1.2 und C1.3 verschiedenen Comonomers;
wobei C1.1, C1.2, C1.3 und C1.4 zusammen 100 Gew.-% des thermoplastischen vinylaromatischen Copolymers C1 ausmachen;
und
C2: 0 bis 90 Gew.-% mindestens eines schlagzäh-modifizierenden Polymers C2;
wobei C1 und C2 zusammen 100 Gew.-% des nicht aus Post-Consumer-Recycling stammenden (neuen) vinylaromatischen Copolymers C ausmachen;
und
D: 0 bis 10 Gewichtsteile mindestens eines weiteren Additivs als Komponente D;
wobei die Komponenten A, B, C und D zusammen 100 Gew.-% der Polymerzusammensetzung P ausmachen;
und
wobei das rezyklierte Post-Consumer-Polymer A in dem vinylaromatischen Copolymer B und gegebenenfalls dem vinylaromatischen Copolymer C gelöst ist, und/oder
wobei das rezyklierte Post-Consumer-Polymer A in Form von diskontinuierlichen Phasendomänen in einer kontinuierlichen Phase des vinylaromatischen Copolymers B und gegebenenfalls des vinylaromatischen Copolymers C dispergiert ist und wobei die diskontinuierliche Phase des rezyklierten Post-Consumer-Polymers A mindestens Phasendomänen mit einem durchschnittlichen Durchmesser im Bereich von > 30 nm bis ≤ 5 µm, bevorzugt > 30 nm bis ≤ 2 µm, stärker bevorzugt > 30 nm bis ≤ 200 nm, häufig > 30 nm bis ≤ 100 nm umfasst,
wobei das rezyklierte Post-Consumer-Polymer A und das rezyklierte vinylaromatische Post-Consumer-Polymer B aus verschiedenen Polymerklassen ausgewählt sind,
wobei das rezyklierte Post-Consumer-Polymer A mindestens ein Polymer umfasst, das aus Polyamiden, Polycarbonaten, thermoplastischen Polyurethanen, Polyalkyl(meth)acrylaten, Polyvinylchloriden, Polystyrol, vinylaromatischen Acrylnitril-Copolymeren, alpha-Methylstyrol-Acrylnitril-Copolymeren, vinylaromatischen Dien-Acrylnitril-Copolymeren und vinylaromatischen Acrylat-Copolymeren ausgewählt ist,
und wobei die rezyklierte Post-Consumer-Polymerkomponente A und die rezyklierte vinylaromatische Post-Consumer-Copolymerkomponente B aus Kunststoffabfällen hergestellt werden.

2. Polymerzusammensetzung P nach Anspruch 1, wobei das rezyklierte Post-Consumer-Polymer A in Form von diskontinuierlichen Phasendomänen in einer kontinuierlichen Phase des vinylaromatischen Copolymers B und gegebenenfalls des vinylaromatischen Copolymers C dispergiert ist, und wobei die diskontinuierliche Phase des rezyklierten Post-Consumer-Polymers A Folgendes umfasst:
(i) Phasendomänen mit einem durchschnittlichen Durchmesser im Bereich von > 30 nm bis ≤ 5 µm, bevorzugt > 30 nm bis ≤ 2 µm, stärker bevorzugt > 30 nm bis ≤ 200 nm, häufig > 30 nm bis ≤ 100 nm und
(ii) gegebenenfalls Phasendomänen mit einem durchschnittlichen Durchmesser im Bereich von > 0,1 bis 30 nm.

3. Polymerzusammensetzung P nach Anspruch 1 oder 2, wobei das rezyklierte Post-Consumer-Polymer A mindestens ein Polymer umfasst, das aus thermoplastischen Polyurethanen (TPU), Polymethyl(meth)acrylaten (PMMA), Polyamid (PA), Polycarbonaten (PC), alpha-Methylstyrol-Acrylnitril-Copolymeren (AMSAN) und Polystyrolen (PS) ausgewählt ist.

4. Polymerzusammensetzung P nach einem der Ansprüche 1 bis 3, wobei das rezyklierte vinylaromatische Copolymer B aus der Gruppe ausgewählt ist, die aus Styrol-Acrylnitril-Copolymeren, Blends von Mischungen aus mindestens einem Styrol-Acrylnitril-Copolymer mit Poly(Acrylnitril-Butadien-Styrol) (ABS) oder Poly(Acrylnitril-Styrol-Acrylester) (ASA) und Mischungen davon besteht.

5. Polymerzusammensetzung P nach einem der Ansprüche 1 bis 4, wobei die Polymerzusammensetzung umfasst:
(a) mindestens ein PMMA als Komponente A und mindestens ein SAN als Komponente B;
(b) mindestens ein PMMA als Komponente A und mindestens ein ABS als Komponente B;
(c) mindestens ein PMMA als Komponente A und mindestens ein ASA als Komponente B;
(d) mindestens ein TPU als Komponente A und mindestens ein SAN als Komponente B;
(e) mindestens ein TPU als Komponente A und mindestens ein ABS als Komponente B;
(f) mindestens ein TPU als Komponente A und mindestens ein ASA als Komponente B;
(g) mindestens ein AMSAN als Komponente A und mindestens ein SAN als Komponente B;
(h) mindestens ein AMSAN als Komponente A und mindestens ein ABS als Komponente B;
(i) mindestens ein AMSAN als Komponente A und mindestens ein ASA als Komponente B;
(j) mindestens ein PC als Komponente A und mindestens ein SAN als Komponente B;
(k) mindestens ein PC als Komponente A und mindestens ein ABS als Komponente B;
(l) mindestens ein PC als Komponente A und mindestens ein ASA als Komponente B;
(m) mindestens ein PA als Komponente A und mindestens ein SAN als Komponente B;
(n) mindestens ein PA als Komponente A und mindestens ein ABS als Komponente B;
(o) mindestens ein PA als Komponente A und mindestens ein ASA als Komponente B;
oder Kombinationen aus den oben genannten.

6. Verfahren zum mechanischen Recycling von rezyklierten Post-Consumer-Polymeren A, wobei das Verfahren die folgenden Verfahrensschritte umfasst:
(i) Bereitstellen mindestens eines rezyklierten Post-Consumer-Polymers A,
(ii) Bereitstellen mindestens eines vinylaromatischen Copolymers B,
(iii) gegebenenfalls Bereitstellen mindestens eines nicht aus Post-Consumer-Recycling stammenden vinylaromatischen Copolymers C,
(iv) gegebenenfalls Bereitstellen weiterer Additive D,
(v) Schmelzmischen von 0,1 bis 50 Gewichtsteilen mindestens eines rezyklierten Post-Consumer-Polymers A, 50 bis 99,9 Gewichtsteilen des mindestens einen rezyklierten vinylaromatischen Post-Consumer-Copolymers B und gegebenenfalls 0 bis 200 Gewichtsteilen eines im Wesentlichen nicht aus Post-Consumer-Recycling stammenden vinylaromatischen Copolymers C, gegebenenfalls in Gegenwart von 0 bis 10 Gewichtsteilen mindestens eines weiteren Additivs als Komponente D,
(vi) Extrudieren des in Verfahrensschritt (v) erhaltenen Schmelzgemischs,
wobei das rezyklierte Post-Consumer-Polymer A und das vinylaromatische Polymer B aus verschiedenen Polymerklassen ausgewählt sind,
wobei das rezyklierte Post-Consumer-Polymer A mindestens ein Polymer umfasst, das aus Polyamiden, Polycarbonaten, thermoplastischen Polyurethanen, Polyalkyl(meth)acrylaten, Polyvinylchloriden, Polystyrol, vinylaromatischen Acrylnitril-Copolymeren, alpha-Methylstyrol-Acrylnitril-Copolymeren, vinylaromatischen Dien-Acrylnitril-Copolymeren und vinylaromatischen Acrylat-Copolymeren ausgewählt ist,
wobei die mindestens eine rezyklierte vinylaromatische Post-Consumer-Copolymerkomponente B umfasst:
B1: 10 bis 100 Gew.-% mindestens eines thermoplastischen vinylaromatischen Copolymers B1, umfassend:
B1.1: 1 bis 81 Gew.-% Styrol-Wiederholungseinheiten,
B1.2: 19 bis 35 Gew.-% Acrylnitril-Wiederholungseinheiten,
B1.3: 0 bis 80 Gew.-% Wiederholungseinheiten mindestens eines Monomers, ausgewählt aus Methyl(meth)acrylat (MMA), Maleinsäureanhydrid (MA) und N-Phenylmaleinimid (n-PMI),
B1.4: 0 bis 20 Gew.-% Wiederholungseinheiten mindestens eines weiteren, von B1.1, B1.2 und B1.3 verschiedenen Comonomers;
wobei B1.1, B1.2, B1.3 und B1.4 zusammen 100 Gew.-% des thermoplastischen vinylaromatischen Copolymers B1 ausmachen;
und
B2: 0 bis 90 Gew.-% mindestens eines schlagzäh-modifizierenden Polymers B2;
wobei B1 und B2 zusammen 100 Gew.-% des vinylaromatischen Copolymers B ausmachen;
und wobei die rezyklierte Post-Consumer-Polymerkomponente A und die rezyklierte vinylaromatische Post-Consumer-Copolymerkomponente B aus Kunststoffabfällen hergestellt werden.

7. Verfahren nach Anspruch 6, wobei sich das mindestens eine rezyklierte vinylaromatische Post-Consumer-Copolymer B von dem mindestens einen rezyklierten Post-Consumer-Polymer A unterscheidet.

8. Verfahren nach Anspruch 6 oder 7, wobei das rezyklierte Post-Consumer-Polymer A und das rezyklierte vinylaromatische Post-Consumer-Polymer B aus verschiedenen Polymerklassen ausgewählt werden.

9. Verfahren nach einem der Ansprüche 6 bis 8, wobei das rezyklierte Post-Consumer-Polymer A mindestens ein Polymer umfasst, das aus der Gruppe ausgewählt ist, die aus thermoplastischen Polyurethanen (TPU), Polymethyl(meth)acrylaten (PMMA), Polyamid (PA), Polycarbonaten (PC), alpha-Methylstyrol-Acrylnitril-Copolymeren (AMSAN) und Polystyrolen (PS) besteht.

10. Verfahren nach einem der Ansprüche 6 bis 9, wobei das rezyklierte vinylaromatische Post-Consumer-Copolymer B aus der Gruppe ausgewählt ist, die aus Styrol-Acrylnitril-Copolymeren, Blends von Mischungen von mindestens einem Styrol-Acrylnitril-Copolymer mit Poly(Acrylnitril-Butadien-Styrol) (ABS) oder Poly(Acrylnitril-Styrol-Acrylester) (ASA) und Mischungen davon besteht.

11. Verwendung eines rezyklierten vinylaromatischen Post-Consumer-Copolymers B zur Herstellung einer Polymerzusammensetzung P, die mindestens ein rezykliertes Post-Consumer-Polymer A enthält, wobei das rezyklierte Post-Consumer-Polymer A in dem rezyklierten vinylaromatischen Post-Consumer-Copolymer B gelöst ist oder wobei das rezyklierte Post-Consumer-Polymer A in Form von diskontinuierlichen Phasendomänen in einer kontinuierlichen Phase des rezyklierten vinylaromatischen Post-Consumer-Copolymers B dispergiert ist und wobei die diskontinuierliche Phase des rezyklierten Post-Consumer-Polymers A mindestens Phasendomänen mit einem durchschnittlichen Durchmesser im Bereich von > 30 nm bis ≤ 5 µm, bevorzugt > 30 nm bis ≤ 2 µm, stärker bevorzugt > 30 nm bis ≤ 200 nm, häufig > 30 nm bis ≤ 100 nm umfasst,
wobei das rezyklierte Post-Consumer-Polymer A und das vinylaromatische Polymer B aus verschiedenen Polymerklassen ausgewählt sind,
wobei das rezyklierte Post-Consumer-Polymer A mindestens ein Polymer umfasst, das aus Polyamiden, Polycarbonaten, thermoplastischen Polyurethanen, Polyalkyl(meth)acrylaten, Polyvinylchloriden, Polystyrol, vinylaromatischen Acrylnitril-Copolymeren, alpha-Methylstyrol-Acrylnitril-Copolymeren, vinylaromatischen Dien-Acrylnitril-Copolymeren und vinylaromatischen Acrylat-Copolymeren ausgewählt ist,
wobei die mindestens eine rezyklierte vinylaromatische Post-Consumer-Copolymerkomponente B umfasst:
B1: 10 bis 100 Gew.-% mindestens eines thermoplastischen vinylaromatischen Copolymers B1, umfassend:
B1.1: 1 bis 81 Gew.-% Styrol-Wiederholungseinheiten,
B1.2: 19 bis 35 Gew.-% Acrylnitril-Wiederholungseinheiten,
B1.3: 0 bis 80 Gew.-% Wiederholungseinheiten mindestens eines Monomers, ausgewählt aus Methyl(meth)acrylat (MMA), Maleinsäureanhydrid (MA) und N-Phenylmaleinimid (n-PMI),
B1.4: 0 bis 20 Gew.-% Wiederholungseinheiten mindestens eines weiteren, von B1.1, B1.2 und B1.3 verschiedenen Comonomers;
wobei B1.1, B1.2, B1.3 und B1.4 zusammen 100 Gew.-% des thermoplastischen vinylaromatischen Copolymers B1 ausmachen;
und
B2: 0 bis 90 Gew.-% mindestens eines schlagzäh-modifizierenden Polymers B2;
wobei B1 und B2 zusammen 100 Gew.-% des vinylaromatischen Copolymers B ausmachen;
und wobei die rezyklierte Post-Consumer-Polymerkomponente A und die rezyklierte vinylaromatische Post-Consumer-Copolymerkomponente B aus Kunststoffabfällen hergestellt werden.

12. Verwendung nach Anspruch 11, wobei das rezyklierte Post-Consumer-Polymer A und das rezyklierte vinylaromatische Post-Consumer-Polymer B aus verschiedenen Polymerklassen ausgewählt sind.

13. Verwendung nach Anspruch 11 oder 12, wobei die Polymerzusammensetzung P umfasst:
(a) mindestens ein PMMA als Komponente A und mindestens ein SAN als Komponente B;
(b) mindestens ein PMMA als Komponente A und mindestens ein ABS als Komponente B;
(c) mindestens ein PMMA als Komponente A und mindestens ein ASA als Komponente B;
(d) mindestens ein TPU als Komponente A und mindestens ein SAN als Komponente B;
(e) mindestens ein TPU als Komponente A und mindestens ein ABS als Komponente B;
(f) mindestens ein TPU als Komponente A und mindestens ein ASA als Komponente B;
(g) mindestens ein AMSAN als Komponente A und mindestens ein SAN als Komponente B;
(h) mindestens ein AMSAN als Komponente A und mindestens ein ABS als Komponente B;
(i) mindestens ein AMSAN als Komponente A und mindestens ein ASA als Komponente B;
(j) mindestens ein PC als Komponente A und mindestens ein SAN als Komponente B;
(k) mindestens ein PC als Komponente A und mindestens ein ABS als Komponente B;
(l) mindestens ein PC als Komponente A und mindestens ein ASA als Komponente B;
(m) mindestens ein PA als Komponente A und mindestens ein SAN als Komponente B;
(n) mindestens ein PA als Komponente A und mindestens ein ABS als Komponente B;
(o) mindestens ein PA als Komponente A und mindestens ein ASA als Komponente B;
oder Kombinationen aus den oben genannten.

## Revendications

1. Composition polymère P comprenant :
A : 0,1 à 50 parties en poids d'au moins un polymère recyclé post-consommation en tant que composant A ;
B : 50 à 99,9 parties en poids d'au moins un copolymère vinylaromatique recyclé post-consommation en tant que composant B, comprenant :
B1 : 10 à 100 % en poids d'au moins un copolymère vinylaromatique thermoplastique B1, comprenant :
B1.1 : 1 à 81 % en poids de motifs de répétition de styrène,
B1.2 : 19 à 35 % en poids de motifs de répétition d'acrylonitrile,
B1.3 : 0 à 80 % en poids de motifs de répétition d'au moins un monomère choisi parmi le méthacrylate de méthyle (MMA), l'anhydride maléique (MA) et le N-phényl-maléimide (n-PMI),
B1.4 : 0 à 20 % en poids de motifs de répétition d'au moins un autre comonomère différent de B1.1, B1.2 et B1.3 ;
où B1.1, B1.2, B1.3 et B1.4 totalisent 100 % en poids du copolymère vinylaromatique thermoplastique B1 ;
et
B2 : 0 à 90 % en poids d'au moins un polymère B2 modifiant la résistance aux chocs ;
dans lequel B1 et B2 totalisent 100 % en poids du copolymère vinylaromatique B ;
C : 0 à 200 parties en poids d'un copolymère vinylaromatique non recyclé post-consommation (vierge) en tant que composant C, comprenant :
C1 : 10 à 100 % en poids d'au moins un copolymère vinylaromatique thermoplastique C1, comprenant :
C1.1 : 1 à 81 % en poids de motifs de répétition de styrène et/ou de dérivés du styrène,
C1.2 : 19 à 35 % en poids de motifs de répétition d'acrylonitrile et/ou de méthacrylonitrile,
C1.3 : 0 à 80 % en poids de motifs de répétition d'au moins un monomère choisi parmi le méthacrylate de méthyle (MMA), l'anhydride maléique (MA) et le N-phényl-maléimide (n-PMI),
C1.4 : 0 à 20 % en poids de motifs de répétition d'au moins un autre comonomère différent de C1.1, C1.2 et C1.3 ;
où C1.1, C1.2, C1.3 et C1.4 totalisent 100 % en poids du copolymère vinylaromatique thermoplastique C1 ;
et
C2 : 0 à 90 % en poids d'au moins un polymère C2 modifiant la résistance aux chocs ;
dans lequel C1 et C2 totalisent 100 % en poids du copolymère vinylaromatique C non recyclé post-consommation (vierge) ;
et
D : 0 à 10 parties en poids d'au moins un autre additif en tant que composant D ;
dans lequel les composants A, B, C et D totalisent 100 % en poids de la composition polymère P ;
et
dans laquelle le polymère recyclé post-consommation A est dissous dans le copolymère vinylaromatique B et, éventuellement, dans le copolymère vinylaromatique C, et/ou
dans lequel le polymère recyclé post-consommation A est dispersé sous forme de domaines de phase discontinue dans une phase continue du copolymère vinylaromatique B et, éventuellement, du copolymère vinylaromatique C, et dans lequel la phase discontinue du polymère recyclé post-consommation A comprend au moins des domaines de phase ayant un diamètre moyen compris dans la plage de > 30 nm à ≤ 5 µm, de préférence > 30 nm à ≤ 2 µm, plus préférablement > 30 nm à ≤ 200 nm, souvent > 30 nm à ≤ 100 nm,
dans lequel le polymère recyclé post-consommation A et le polymère vinylaromatique B recyclé post-consommation sont choisis parmi des classes de polymères différentes,
dans lequel le polymère recyclé post-consommation A comprend au moins un polymère choisi parmi les polyamides, les polycarbonates, les polyuréthanes thermoplastiques, les poly(méth)acrylates d'alkyle, les chlorures de polyvinyle, le polystyrène, des copolymères vinylaromatiques-acrylonitrile, des copolymères alpha-méthylstyrène-acrylonitrile, des copolymères vinylaromatiques-diène-acrylonitrile et des copolymères vinylaromatiques-acrylate,
et dans lequel le composant polymère recyclé post-consommation A et le composant copolymère vinylaromatique B recyclé post-consommation sont préparés à partir de déchets de matière plastique.

2. Composition polymère P selon la revendication 1, dans laquelle le polymère recyclé post-consommation A est dispersé sous forme de domaines de phase discontinue dans une phase continue du copolymère vinylaromatique B et, éventuellement, du copolymère vinylaromatique C, et dans laquelle la phase discontinue du polymère recyclé post-consommation A comprend :
(i) des domaines de phase ayant un diamètre moyen compris entre > 30 nm et ≤ 5 µm, de préférence entre > 30 nm et ≤ 2 µm, plus préférablement entre > 30 nm et ≤ 200 nm, souvent entre > 30 nm et ≤ 100 nm, et
(ii) éventuellement des domaines de phase ayant un diamètre moyen compris entre > 0,1 et 30 nm.

3. Composition polymère P selon la revendication 1 ou 2, dans laquelle le polymère recyclé post-consommation A comprend au moins un polymère choisi parmi les polyuréthanes thermoplastiques (TPU), les polyméthyl(méth)acrylates (PMMA), le polyamide (PA), des polycarbonates (PC), des copolymères d'alpha-méthylsty-rène-acrylonitrile (AMSAN) et des polystyrènes (PS).

4. Composition polymère P selon l'une des revendications 1 à 3, dans laquelle le copolymère vinylaromatique recyclé post-consommation B est choisi dans le groupe constitué des copolymères styrène-acrylonitrile, des mélanges de mélanges d'au moins un copolymère styrène-acrylonitrile avec du poly(acrylonitrile-butadiène-styrène) (ABS) ou de poly(acrylonitrile-styrène-ester acrylique) (ASA), et de leurs mélanges.

5. Composition polymère P selon l'une des revendications 1 à 4, dans laquelle la composition polymère comprend :
(a) au moins un PMMA en tant que composant A et au moins un SAN en tant que composant B ;
(b) au moins un PMMA en tant que composant A et au moins un ABS en tant que composant B ;
(c) au moins un PMMA en tant que composant A et au moins un ASA en tant que composant B ;
(d) au moins un TPU en tant que composant A et au moins un SAN en tant que composant B ;
(e) au moins un TPU en tant que composant A et au moins un ABS en tant que composant B ;
(f) au moins un TPU en tant que composant A et au moins un ASA en tant que composant B ;
(g) au moins un AMSAN en tant que composant A et au moins un SAN en tant que composant B ;
(h) au moins un AMSAN en tant que composant A et au moins un ABS en tant que composant B ;
(i) au moins un AMSAN en tant que composant A et au moins un ASA en tant que composant B ;
(j) au moins un PC en tant que composant A et au moins un SAN en tant que composant B ;
(k) au moins un PC en tant que composant A et au moins un ABS en tant que composant B ;
(l) au moins un PC en tant que composant A et au moins un ASA en tant que composant B ;
(m) au moins un PA en tant que composant A et au moins un SAN en tant que composant B ;
(n) au moins un PA en tant que composant A et au moins un ABS en tant que composant B ;
(o) au moins un PA en tant que composant A et au moins un ASA en tant que composant B ;
ou des combinaisons de ce qui précède.

6. Procédé de recyclage mécanique de polymères A recyclés post-consommation, dans lequel le procédé comprend les étapes suivantes :
(i) fournir au moins un polymère recyclé post-consommation A,
(ii) fournir au moins un copolymère vinylaromatique B,
(iii) fournir éventuellement au moins un copolymère vinylaromatique C non recyclé post-consommation,
(iv) fournir éventuellement d'autres additifs D,
(v) mélanger à l'état fondu 0,1 à 50 parties en poids d'au moins un polymère recyclé post-consommation A, 50 à 99,9 parties en poids dudit au moins un copolymère vinylaromatique recyclé post-consommation B et, éventuellement, 0 à 200 parties en poids d'un copolymère vinylaromatique C essentiellement non recyclé post-consommation, éventuellement en présence de 0 à 10 parties en poids d'au moins un additif supplémentaire en tant que composant D,
(vi) extruder le mélange fondu obtenu à l'étape (v),
dans lequel le polymère recyclé post-consommation A et le polymère vinylaromatique B sont choisis parmi des classes de polymères différentes,
dans lequel le polymère recyclé post-consommation A comprend au moins un polymère choisi parmi les polyamides, les polycarbonates, les polyuréthanes thermoplastiques, les poly(méth)acrylates d'alkyle, les chlorures de polyvinyle, le polystyrène, des copolymères vinylaromatiques-acrylonitrile, des copolymères alpha-mé-thylstyrène-acrylonitrile, des copolymères vinylaromatiques-diène-acrylonitrile et des copolymères vinylaromatiques-acrylate,
dans lequel le composant B, constitué d'au moins un copolymère vinylaromatique recyclé post-consommation, comprend :
B1 : 10 à 100 % en poids d'au moins un copolymère vinylaromatique thermoplastique B1, comprenant :
B1.1 : 1 à 81 % en poids de motifs de répétition de styrène,
B1.2 : 19 à 35 % en poids de motifs de répétition d'acrylonitrile,
B1.3 : 0 à 80 % en poids de motifs de répétition d'au moins un monomère choisi parmi le méthacrylate de méthyle (MMA), l'anhydride maléique (MA) et le N-phényl-maléimide (n-PMI),
B1.4 : 0 à 20 % en poids de motifs de répétition d'au moins un autre comonomère différent de B1.1, B1.2 et B1.3 ;
où B1.1, B1.2, B1.3 et B1.4 totalisent 100 % en poids du copolymère vinylaromatique thermoplastique B1 ;
et
B2 : 0 à 90 % en poids d'au moins un polymère B2 modifiant la résistance aux chocs ;
dans lequel B1 et B2 totalisent 100 % en poids du copolymère vinylaromatique B ;
et dans lequel le composant polymère recyclé post-consommation A et le composant copolymère vinylaromatique B recyclé post-consommation sont préparés à partir de déchets de matière plastique.

7. Procédé selon la revendication 6, dans lequel l'au moins un copolymère vinylaromatique recyclé post-consommation B est différent de l'au moins un polymère recyclé post-consommation A.

8. Procédé selon la revendication 6 ou 7, dans lequel le polymère recyclé post-consommation A et le copolymère vinylaromatique recyclé post-consommation B sont choisis parmi des classes de polymères différentes.

9. Procédé selon l'une des revendications 6 à 8, dans lequel le polymère recyclé post-consommation A comprend au moins un polymère choisi dans le groupe constitué des polyuréthanes thermoplastiques (TPU), des polyméthyl(méth)acrylates (PMMA), du polyamide (PA), des polycarbonates (PC), des copolymères d'alpha-méthylstyrène-acrylonitrile (AMSAN) et des polystyrènes (PS).

10. Procédé selon l'une des revendications 6 à 9, dans lequel le copolymère vinylaromatique recyclé post-consommation B est choisi dans le groupe constitué des copolymères styrène-acrylonitrile, des mélanges de mélanges d'au moins un copolymère styrène-acrylonitrile avec du poly(acrylonitrile-butadiène-styrène) (ABS) ou de poly(acrylonitrile-styrène-ester acrylique) (ASA), et de leurs mélanges.

11. Utilisation d'un copolymère vinylaromatique recyclé post-consommation B pour la préparation d'une composition polymère P comprenant au moins un polymère recyclé post-consommation A, dans laquelle le polymère recyclé post-consommation A est dissous dans le copolymère vinylaromatique recyclé post-consommation B ou dans laquelle le polymère recyclé post-consommation A est dispersé sous forme de domaines de phase discontinue dans une phase continue du copolymère vinylaromatique recyclé post-consommation B et dans lequel la phase discontinue du polymère recyclé post-consommation A comprend au moins des domaines de phase ayant un diamètre moyen compris dans la plage de > 30 nm à ≤ 5 µm, de préférence de > 30 nm à ≤ 2 µm, plus préférablement de > 30 nm à ≤ 200 nm, souvent de > 30 nm à ≤ 100 nm,
dans lequel le polymère recyclé post-consommation A et le polymère vinylaromatique B sont choisis parmi des classes de polymères différentes,
dans lequel le polymère recyclé post-consommation A comprend au moins un polymère choisi parmi les polyamides, les polycarbonates, les polyuréthanes thermoplastiques, les poly(méth)acrylates d'alkyle, les chlorures de polyvinyle, le polystyrène, des copolymères vinylaromatiques-acrylonitrile, des copolymères alpha-méthylstyrène-acrylonitrile, des copolymères vinylaromatiques-diène-acrylonitrile et des copolymères vinylaromatiques-acrylate,
dans lequel le composant B, constitué d'au moins un copolymère vinylaromatique recyclé post-consommation, comprend :
B1 : 10 à 100 % en poids d'au moins un copolymère vinylaromatique thermoplastique B1, comprenant :
B1.1 : 1 à 81 % en poids de motifs de répétition de styrène,
B1.2 : 19 à 35 % en poids de motifs de répétition d'acrylonitrile,
B1.3 : 0 à 80 % en poids de motifs de répétition d'au moins un monomère choisi parmi le méthacrylate de méthyle (MMA), l'anhydride maléique (MA) et le N-phényl-maléimide (n-PMI),
B1.4 : 0 à 20 % en poids de motifs de répétition d'au moins un autre comonomère différent de B1.1, B1.2 et B1.3 ;
où B1.1, B1.2, B1.3 et B1.4 totalisent 100 % en poids du copolymère vinylaromatique thermoplastique B1 ;
et
B2 : 0 à 90 % en poids d'au moins un polymère B2 modifiant la résistance aux chocs ;
dans lequel B1 et B2 totalisent 100 % en poids du copolymère vinylaromatique B ;
et dans lequel le composant polymère recyclé post-consommation A et le composant copolymère vinylaromatique B recyclé post-consommation sont préparés à partir de déchets de matière plastique.

12. Utilisation selon la revendication 11, dans laquelle le polymère recyclé post-consommation A et le polymère vinylaromatique B recyclé post-consommation sont choisis parmi des classes de polymères différentes.

13. Utilisation selon la revendication 11 ou 12, dans laquelle la composition polymère P comprend :
(a) au moins un PMMA en tant que composant A et au moins un SAN en tant que composant B ;
(b) au moins un PMMA en tant que composant A et au moins un ABS en tant que composant B ;
(c) au moins un PMMA en tant que composant A et au moins un ASA en tant que composant B ;
(d) au moins un TPU en tant que composant A et au moins un SAN en tant que composant B ;
(e) au moins un TPU en tant que composant A et au moins un ABS en tant que composant B ;
(f) au moins un TPU en tant que composant A et au moins un ASA en tant que composant B ;
(g) au moins un AMSAN en tant que composant A et au moins un SAN en tant que composant B ;
(h) au moins un AMSAN en tant que composant A et au moins un ABS en tant que composant B ;
(i) au moins un AMSAN en tant que composant A et au moins un ASA en tant que composant B ;
(j) au moins un PC en tant que composant A et au moins un SAN en tant que composant B ;
(k) au moins un PC en tant que composant A et au moins un ABS en tant que composant B ;
(l) au moins un PC en tant que composant A et au moins un ASA en tant que composant B ;
(m) au moins un PA en tant que composant A et au moins un SAN en tant que composant B ;
(n) au moins un PA en tant que composant A et au moins un ABS en tant que composant B ;
(o) au moins un PA en tant que composant A et au moins un ASA en tant que composant B ;
ou des combinaisons de ce qui précède.
